(19) Europäisches Patentamt

European Patent Office

Office européen des brevets

(11) **EP 4 761 131 A1**

(12) **EUROPEAN PATENT APPLICATION**
published in accordance with Art. 153(4) EPC

(43) Date of publication:
**17.06.2026 Bulletin 2026/25**

(21) Application number: **24853238.4**

(22) Date of filing: **18.04.2024**

(51) International Patent Classification (IPC):
**H04B 7/06** (2006.01)   **H04W 24/10** (2009.01)

(86) International application number:
**PCT/CN2024/088510**

(87) International publication number:
**WO 2025/035822 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023   CN 202311018925**

(71) Applicant: **ZTE Corporation
Shenzhen, Guangdong  518057 (CN)**

(72) Inventors:
 • **LI, Lun**
   **Shenzhen, Guangdong 518057 (CN)**
 • **LU, Zhaohua**
   **Shenzhen, Guangdong 518057 (CN)**
 • **LI, Yong**
   **Shenzhen, Guangdong 518057 (CN)**
 • **ZHENG, Guozeng**
   **Shenzhen, Guangdong 518057 (CN)**
 • **XIAO, Huahua**
   **Shenzhen, Guangdong 518057 (CN)**

(74) Representative: **Aipex B.V.
Vestdijk 51
5611 CA Eindhoven (NL)**

(54) **TRANSMISSION METHOD FOR CHANNEL STATE INFORMATION REPORT, COMMUNICATION NODE, AND STORAGE MEDIUM**

(57)    Provided are a transmission method for a channel state information report, a communication node, and a storage medium. The method includes the following: Capability information for processing a CSI report is indicated to a second communication node. A CSI report is processed according to configuration information from the second communication node.

Indicate capability information for processing a CSI report to a second communication node ⟞ 110

Process a CSI report according to configuration information from the second communication node ⟞ 120

**FIG. 1**

EP 4 761 131 A1

**Description**

TECHNICAL FIELD

The present application relates to the technical field of wireless communication, for example, to a transmission method for a channel state information report, a communication node, and a storage medium.

BACKGROUND

Channel state information (CSI) is used to describe channel properties of a communication link. Typically, a base station sends a reference signal, a terminal measures the reference signal, determines channel state information from the base station to the terminal, and reports the channel state information to the base station, and the base station receives the channel state information reported by the terminal. The base station determines a strategy for channel state information reporting based on a channel state represented by the received channel state information and transmits data. In a process of reporting channel state information, parameters of different CSI reports or contents of reporting entities may be configured. If a CSI report conflict occurs or transmission resources are insufficient, transmission resources can only be allocated to a portion of the CSI reports, and a portion of the CSI reports will be discarded, which affects the occupancy of resources of the CSI report processing unit. How to determine CSI reports that should be transmitted or discarded affects transmission efficiency and communication quality.

SUMMARY

The present application provides a transmission method for a channel state information report, a communication node, and a storage medium.

An embodiment of the present application provides a transmission method for a channel state information report. The transmission method is applied to a first communication node and includes the following:

Capability information for processing a CSI report is indicated to a second communication node. A CSI report is processed according to configuration information from the second communication node.

An embodiment of the present application also provides a transmission method for a channel state information report. The transmission method is applied to a second communication node and includes the following:

Capability information for processing a CSI report indicated by a first communication node is received. Configuration information is sent to the first communication node, where the configuration information is used to instruct the first communication node to process a CSI report. The CSI report transmitted by the first communication node is received.

An embodiment of the present application also provides a transmission apparatus for a channel state information report. The transmission apparatus includes an indication module and a processing module.

The indication module is configured to indicate, to a second communication node, capability information for processing a CSI report. The processing module is configured to process a CSI report according to configuration information from the second communication node.

An embodiment of the present application also provides a transmission apparatus for a channel state information report. The transmission apparatus includes a first reception module, a sending module, and a second reception module.

The first reception module is configured to receive capability information for processing a CSI report indicated by a first communication node.

The sending module is configured to send configuration information to the first communication node, where the configuration information is used to instruct the first communication node to process a CSI report. The second reception module is configured to receive the CSI report transmitted by the first communication node.

An embodiment of the present application also provides a communication node. The communication node includes a memory, a processor, and a computer program stored in the memory and executable on the processor, where the processor, when executing the computer program, implements the transmission method for a channel state information report described above.

An embodiment of the present application also provides a computer-readable storage medium storing a computer program that, when executed by a processor, implements the transmission method for a channel state information report described above.

BRIEF DESCRIPTION OF DRAWINGS

FIG. 1 is a flowchart of a transmission method for a channel state information report according to an embodiment.

FIG. 2 is a diagram of a transmission process for a channel state information report according to an embodiment.

FIG. 3 is a diagram of another transmission process for a channel state information report according to an embodiment.

FIG. 4 is a flowchart of another transmission process for a channel state information report according to an embodiment.

FIG. 5 is a diagram of another transmission process for a channel state information report according to an embodiment.

FIG. 6 is a flowchart of another transmission method for a channel state information report according to an embodiment.

FIG. 7 is a diagram illustrating the structure of a transmission apparatus for a channel state information report according to an embodiment.

FIG. 8 is a diagram illustrating the structure of another transmission apparatus for a channel state information report according to an embodiment.

FIG. 9 is a diagram illustrating the hardware structure of a communication node according to an embodiment.

DETAILED DESCRIPTION

The present application is described in conjunction with drawings and embodiments. The specific embodiments described herein are intended to explain the present application. For ease of description, only parts related to the present application are illustrated in the drawings.

In a process of reporting CSI, a base station sends a reference signal; a terminal measures the reference signal, determines CSI from the base station to the terminal, and reports the CSI to the base station; and the base station receives the CSI reported by the terminal. The base station determines, according to the channel state represented by the received CSI, a strategy for data transmission and transmits data, thereby improving the efficiency of data transmission. The more sufficient and accurate the CSI mastered by the base station, the more beneficial it is to formulate an appropriate data transmission strategy, thereby improving performance of the system. Therefore, the system expects the terminal to report a more accurate channel state information report. The expected reports are, for example, reports corresponding to different transmit beams of antennas of the base station; for another example, reports corresponding to different numbers of antenna ports; for another example, reports corresponding to different precoding codebooks; for another example, reports corresponding to different manners of acquiring precoding; for another example, reports corresponding to different monitored manners of acquiring precoding; for another example, reports corresponding to different combinations of report contents.

A problem that needs to be solved is how the terminal reports more accurate related CSI to the base station according to information configured by the base station and measured channel results, to help the base station better master a downlink channel state and adopt an appropriate data transmission strategy.

In a wireless communication scenario, a first communication node communicates with a second communication node through a wireless channel. For example, the first communication node is a terminal, and the second communication node is a base station, where the base station communicates with the terminal through a wireless channel. For another example, the first communication node is a terminal, and the second communication node is a wireless router, where the wireless router communicates with the terminal through a wireless channel. For another example, the first communication node is a first base station, and the second communication node is a second base station, where the first base station communicates with the second base station through a wireless channel. For another example, the first communication node is a first terminal, and the second communication node is a second terminal, where the first terminal communicates with the second terminal through a wireless channel. For another example, the first communication node is a repeater, and the second communication node is a base station, where the base station communicates with the repeater through a wireless channel. For another example, the first communication node is a terminal, and the second communication node is a repeater, where the repeater communicates with the terminal through a wireless channel. For another example, the first communication node is a first repeater, and the second communication node is a second repeater, where the first repeater communicates with the second repeater through a wireless channel. For another example, the first communication node is a base station, and the second communication node is a satellite, where the satellite communicates with the base station through a wireless channel. For another example, the first communication node is a satellite, and the second communication node is a base station, where the base station communicates with the satellite through a wireless channel. For another example, the first communication node is a terminal, and the second communication node is a satellite, where the satellite communicates with the terminal through a wireless channel. For another example, the first communication node is a satellite, and the second communication node is a terminal, where the terminal communicates with the satellite through a wireless channel. For another example, the first communication node is ground equipment, and the second communication node is an aircraft, where the aircraft communicates with the ground equipment through a wireless channel. For another example, the first communication node is a first aircraft, and the second communication node is a second aircraft, where the first aircraft communicates with the second aircraft through a wireless channel.

Concepts such as "first" and "second" in the embodiments of the present application are used to distinguish between apparatuses, modules, units, or other objects, and are not intended to limit the order or mutual dependence of the functions performed by these apparatuses, modules, units, or other objects.

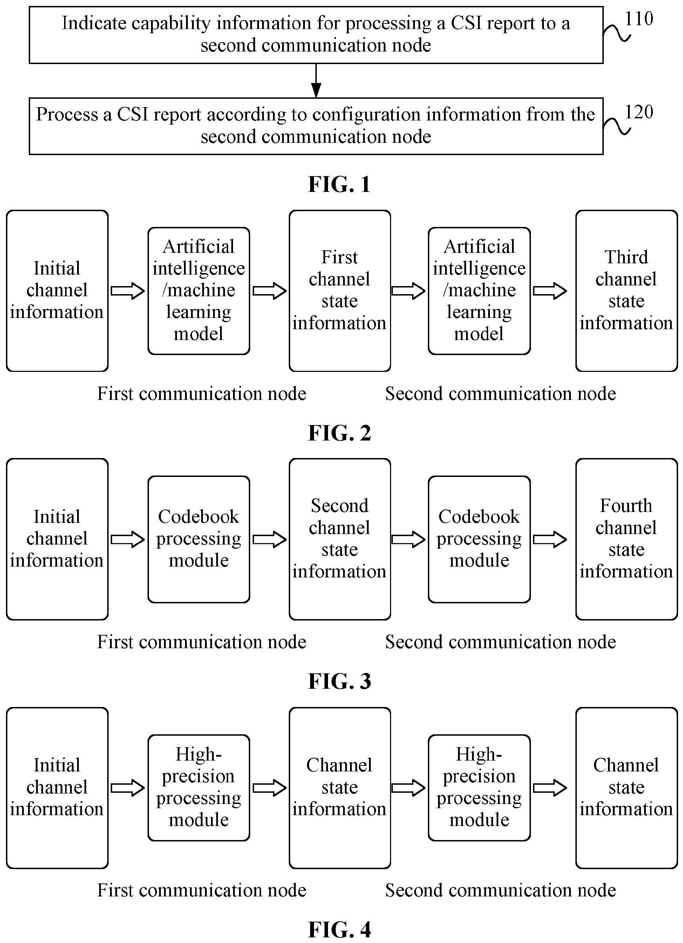

FIG. 1 is a flowchart of a transmission method for a channel state information report according to an embodiment. The method may be applied to a first communication node. The first communication node may be understood as a communication node that processes and transmits a CSI report, such as a terminal. The second communication node is, for example, a base station. As shown in FIG. 1, the method provided by this embodiment includes 110, 120, and 130.

In 110, capability information for processing a CSI report is indicated to a second communication node.

In 120, a CSI report is processed according to configuration information from the second communication node.

In this embodiment, the first communication node may perform one CSI calculation at a time or perform multiple CSI calculations simultaneously. Performing multiple CSI calculations simultaneously is referred to as CSI calculation concurrency, CSI calculation concurrent execution, concurrent CSI calculations, or concurrent execution of CSI calculations.

The first communication node may perform multiple CSI calculations. For example, the first communication node measures multiple channel state information reference signal (CSI-RS) resources or measures reference signals on multiple CSI-RS resources. For another example, the first communication node calculates multiple precoding matrices. For another example, the first communication node processes precoding matrices of multiple ranks. For another example, the first communication node processes precoding matrices of multiple layers. For another example, the first communication node calculates precoding matrices according to multiple precoding matrix codebooks. For another example, the first communication node processes precoding matrices using one or multiple artificial intelligence (AI)/machine learning (ML) models or neural networks (NNs). For another example, the first communication node processes precoding matrices under multiple different overheads. For another example, the first communication node processes CSI on multiple frequency domain units. For another example, the first communication node acquires precoding matrices in multiple manners. For another example, the first communication node monitors multiple manners of acquiring precoding matrices.

The first communication node may acquire precoding matrices in multiple manners. For example, one manner is to acquire a precoding matrix according to a first precoding matrix codebook, another manner is to acquire a precoding matrix according to a second precoding matrix codebook, another manner is to acquire a precoding matrix using a first machine learning model, another manner is to acquire a precoding matrix using a second machine learning model, another manner is to acquire a precoding matrix based on a first overhead, and another manner is to acquire a precoding matrix based on a second overhead. For another example, one manner is to acquire a precoding matrix according to a first precoding matrix codebook and a first overhead, another manner is to acquire a precoding matrix according to the first precoding matrix codebook and a second overhead, another manner is to acquire a precoding matrix according to a second precoding matrix codebook and the first overhead, and another manner is to acquire a precoding matrix according to the second precoding matrix codebook and the second overhead. For another example, one manner is to acquire a precoding matrix according to a first overhead and using a first machine learning model, another manner is to acquire a precoding matrix according to the first overhead and using a second machine learning model, another manner is to acquire a precoding matrix according to a second overhead and using the first machine learning model, and another manner is to acquire a precoding matrix according to the second overhead and using a second machine learning model.

The first communication node may support multiple pieces of capability information for processing CSI reports. One piece of information is the support for multiple manners of acquiring CSI, for example, acquiring CSI based on a codebook and acquiring CSI based on an artificial intelligence/machine learning model. One piece of information is the size of resources supported for CSI concurrent calculations or the size of available resources for CSI concurrent calculations. One piece of information is functional information applicable to supported CSI, for example, channel scenario information, antenna configuration and port number information, frequency domain unit number information, height, position, speed, and other information of the first communication node, a number of supported ranks, input/output dimension information of precoding matrices, a supported feedback overhead size, information about a number of supported measured beams, and the like.

In this embodiment, the first communication node indicates information of supported capabilities to the second communication node, the second communication node sends configuration information to the first communication node, and the first communication node processes a CSI report according to the configuration information. For example, the first communication node transmits the CSI report to the second communication node according to the priority of the CSI report or transmits or discards the CSI report according to a received CSI-RS transmission occasion. On this basis, CSI reports have different priorities. In a process of transmitting CSI reports, transmission resources prioritize the transmission of a CSI report with a high priority. If a CSI report conflict occurs and transmission resources are insufficient, a report with a lower priority may be preferentially discarded. Moreover, for occupancy of resources of the CSI report processing unit, related CSI reports may also be preferentially calculated and processed according to priorities of the CSI reports. By the effective determination of priorities of CSI reports or discard of CSI reports, transmission efficiency and communication quality are improved.

In an embodiment, the method also includes 130.

In 130, the CSI report is transmitted to the second communication node according to the priority of the CSI report.

In an embodiment, the method also includes determining the priority of the CSI report according to a manner of acquiring CSI in the CSI report.

In this embodiment, the priority of the CSI report is determined according to the manner of acquiring CSI in the CSI report. For example, in CSI report 1, CSI is calculated and acquired using manner 1, and in CSI report 2, CSI is calculated and acquired using manner 2. If the priority of CSI report 1 is higher than the priority of CSI report 2, CSI report 1 is preferentially reported and transmitted, and CSI report 2 is transmitted later. When transmission resources are limited and all CSI reports cannot be transmitted, a CSI report with a low priority is preferentially discarded/not transmitted.

In an embodiment, CSI report 1 is a CSI report based on a codebook calculation manner, where the codebook calculation manner includes but is not limited to a Release-15 Type I codebook, Type II codebook, and Type II Port Selection codebook, a Release-16 Enhanced Type II codebook (eType II codebook) and Enhanced Type II Port Selection codebook, a Release-17 Further Enhanced Type II codebook, a Release-18 Enhanced Type II for coherent joint transmission (CJT) codebook, Further Enhanced Type II Port Selection for CJT codebook, Enhanced Type II for predicted Precoding Matrix Indicator (PMI) codebook, and Further Enhanced Type II Port Selection for predicted PMI codebook. CSI obtained based on different codebook manners may also be different manners of acquiring CSI. For example, a Release-18 Enhanced Type II for CJT codebook and a Release-16 Enhanced Type II codebook may be two different manners of acquiring CSI. CSI report 2 is a CSI report based on an artificial intelligence/machine learning model calculation manner. Serial numbers of the two reports are only used for descriptive distinction and do not represent any chronological order. Considering that precision of CSI based on the artificial intelligence/machine learning model calculation manner (or precoding/a precoding matrix in a report based on the artificial intelligence/machine learning model calculation manner) may be higher and more beneficial to help the base station recover downlink channel characteristics, the CSI report based on the artificial intelligence/machine learning model calculation manner (that is, CSI report 2) may be given a higher transmission priority.

When the base station configures the same reference signal resource measurement for the two reports, considering that precision of CSI based on the artificial intelligence/machine learning model calculation manner (or precision of precoding/a precoding matrix in a report based on the artificial intelligence/machine learning model calculation manner) may be higher and more beneficial to help the base station recover downlink channel characteristics, the CSI report based on the artificial intelligence/machine learning model calculation manner (that is, CSI report 2) is given a higher transmission priority.

In an embodiment, CSI report 1 is a CSI report based on a codebook calculation manner, where the codebook calculation manner includes but is not limited to a Release-15 Type I codebook, Type II codebook, and Type II Port Selection codebook, a Release-16 Enhanced Type II codebook (eType II codebook) and Enhanced Type II Port Selection codebook, a Release-17 Further Enhanced Type II codebook, a Release-18 Enhanced Type II for CJT codebook, Further Enhanced Type II Port Selection for CJT codebook, Enhanced Type II for predicted PMI codebook, and Further Enhanced Type II Port Selection for predicted PMI codebook. CSI report 2 is a CSI report based on an artificial intelligence/machine learning model calculation manner. Serial numbers of the two reports are only used for descriptive distinction and do not represent any chronological order. Precision of CSI based on the artificial intelligence/machine learning model calculation manner (or precoding/a precoding matrix in a report based on the artificial intelligence/machine learning model calculation manner) is affected by factors such as model generalization and model complexity, and the precision of CSI is not stable, while a codebook-based calculation manner has better universality and is more beneficial to help the base station stably recover downlink channel characteristics. Thus, the CSI report based on the codebook calculation manner (that is, CSI report 1) may be given a higher transmission priority.

When the base station configures the same reference signal resource measurement for the two reports, considering that precision of CSI based on the artificial intelligence/machine learning model calculation manner (or precoding/a precoding matrix in a report based on the artificial intelligence/machine learning model calculation manner) is affected by factors such as model generalization and model complexity, and the precision of CSI is not stable, while a codebook-based calculation manner has better universality and is more beneficial to help the base station stably recover downlink channel characteristics, the CSI report based on the codebook calculation manner (that is, CSI report 1) is given a higher transmission priority.

In an embodiment, a first CSI acquired through a first manner is associated with a second CSI acquired through a second manner, a first precoding in a first CSI report corresponding to the first manner is associated with a second precoding in a second CSI report corresponding to the second manner, and a first precoding matrix in the first CSI report corresponding to the first manner is associated with a second precoding matrix in the second CSI report corresponding to the second manner.

In this embodiment, the first CSI/first precoding/first precoding matrix corresponding to the first manner may be used for monitoring the second CSI/second precoding/second precoding acquired based on the second manner.

In an embodiment, the method also includes at least one of the following:

In a case where the performance of the first CSI is inferior to the performance of the second CSI, the priority of the first CSI report is lower than the priority of the second CSI report. In a case where the performance of the first precoding is inferior to the performance of the second precoding, the priority of the first CSI report is lower than the priority of the second CSI report. In a case where the performance of the first precoding matrix is inferior to the performance of the second precoding matrix, the priority of the first CSI report is lower than the priority of the second CSI report.

In an embodiment, the method also includes calculating the evaluation metric performance according to at least one of the following: the first CSI and the second CSI, the first precoding and the second precoding, or the first precoding matrix and the second precoding matrix; and in a case where the evaluation metric performance satisfies a preset threshold, the priority of the first CSI report being higher than the priority of the second CSI report.

In an embodiment, CSI report 1 is a CSI report based on a codebook calculation manner, where the codebook calculation manner includes but is not limited to a Release-15 Type I codebook, Type II codebook, and Type II Port Selection codebook, a Release-16 Enhanced Type II codebook (eType II codebook) and Enhanced Type II Port Selection codebook, a Release-17 Further Enhanced Type II codebook, a Release-18 Enhanced Type II for CJT codebook, Further Enhanced Type II Port Selection for CJT codebook, Enhanced Type II for predicted PMI codebook, and Further Enhanced Type II Port Selection for predicted PMI codebook. CSI report 2 is a CSI report based on an artificial intelligence/machine learning model calculation manner. Serial numbers of the two reports are only used for descriptive distinction and do not represent any chronological order. When the base station configures the same reference signal resource measurement for the two reports, CSI (or precoding/a precoding matrix) acquired based on the artificial intelligence/machine learning model calculation manner and CSI (or precoding/a precoding matrix) acquired based on the codebook calculation manner are calculated based on the same channel coefficients. When the CSI acquired based on the codebook manner (or the precoding/precoding matrix in the report based on the codebook manner) is used for monitoring the CSI acquired based on the artificial intelligence/machine learning model calculation manner (or the precoding/precoding matrix in the report based on the artificial intelligence/machine learning model calculation manner), one situation exemplarily is that if evaluation metric performance of the CSI obtained based on the AI/ML model calculation manner (or the precoding/precoding matrix in the report based on the AI/ML model calculation manner) is inferior to the performance of CSI obtained based on the codebook manner (or the precoding/ precoding matrix in the report based on the codebook manner), the CSI report based on the codebook calculation manner (that is, CSI report 1) is given a higher transmission priority; otherwise, the CSI report based on the artificial intelligence/machine learning model calculation manner (that is, CSI report 2) is given a higher transmission priority.

One situation exemplarily is that the evaluation metric performance (for example, correlation, similarity, error function, throughput, spectral efficiency, and bit error rate and/or block error rate) is calculated for the CSI obtained based on the AI/ML model calculation manner (or the precoding/precoding matrix in the report based on the AI/ML model calculation manner) and the CSI obtained based on the codebook manner (or the precoding/precoding matrix in the report based on the codebook manner), and the calculated evaluation metric performance is compared with a preset threshold. If the evaluation metric performance meets the requirement of the preset threshold (the evaluation metric performance may be higher than the preset threshold to meet the standard or lower than the preset threshold to meet the standard, where the requirement is related to a performance evaluation metric), the CSI report based on the artificial intelligence/machine learning model calculation manner (that is, CSI report 2) is given a higher transmission priority; otherwise, if the evaluation metric performance fails to meet the requirement of the preset threshold, the CSI report based on the codebook calculation manner (that is, CSI report 1) is given a higher transmission priority.

One situation exemplarily is that the first communication node calculates evaluation metric performance (for example, correlation/similarity, error function, throughput, spectral efficiency, and bit error rate and/or block error rate) for CSI obtained based on another processing module calculation manner (or precoding/a precoding matrix obtained based on another processing module calculation manner) and initial channel information (or an initial precoding/a precoding matrix), where another processing module may include but is not limited to a part of an AI/ML model, and then the calculated evaluation metric performance is compared with a preset threshold. If the preset threshold is satisfied (the evaluation metric performance may be higher than the preset threshold or lower than the preset threshold, where the requirement is related to a performance evaluation metric), the CSI report based on the artificial intelligence/machine learning model calculation manner (that is, CSI report 2) is given a higher transmission priority; otherwise, if the evaluation metric performance fails to meet the requirement of the threshold, the CSI report based on the codebook calculation manner (that is, CSI report 1) is given a higher transmission priority.

One situation exemplarily is that the first communication node calculates evaluation metric performance (for example, correlation/similarity, error function, throughput, spectral efficiency, and bit error rate and/or block error rate) for CSI obtained based on another processing module calculation manner (or precoding/a precoding matrix obtained based on another processing module calculation manner) and the CSI obtained based on the codebook manner (or the precoding/ precoding matrix obtained based on the codebook manner), where another processing module may include but is not limited to a part of an AI/ML model, and then the calculated evaluation metric performance is compared with a preset threshold. If the preset threshold is satisfied (the evaluation metric performance may be higher than the preset threshold or lower than the preset threshold, where the requirement is related to a performance evaluation metric), the CSI report based on the artificial intelligence/machine learning model calculation manner (that is, CSI report 2) is given a higher transmission priority; otherwise, if the evaluation metric performance fails to meet the requirement of the threshold, the CSI report based on the codebook calculation manner (that is, CSI report 1) is given a higher transmission priority.

In an embodiment, CSI acquired through a specified manner includes initial channel information, a precoding in a CSI report corresponding to the specified manner includes an initial precoding, and a precoding matrix in the CSI report corresponding to the specified manner includes an initial precoding matrix.

In an embodiment, CSI acquired through a specified manner includes CSI obtained based on a codebook manner, a precoding in a CSI report corresponding to the specified manner includes a precoding obtained based on the codebook manner, and a precoding matrix in the CSI report corresponding to the specified manner includes a precoding matrix obtained based on the codebook manner.

In an embodiment, at least one of the following parameters in a CSI report corresponding to a specified manner is higher than a set value: accuracy, parameter combination index, feedback overhead, or received signal power. In this case, the specified manner may also be referred to as a codebook manner with high precision/high parameter combination index/high feedback overhead/high received signal power.

In an embodiment, determining the priority of the CSI report according to the manner of acquiring the CSI in the CSI report includes calculating a third CSI according to the first CSI; calculating a fourth CSI according to the second CSI; determining a first evaluation metric performance according to the third CSI and CSI acquired through a specified manner; determining a second evaluation metric performance according to the fourth CSI and the CSI acquired through the specified manner; and in a case where the first evaluation metric performance is superior to the second evaluation metric performance, the priority of the first CSI report being higher than the priority of the second CSI report.

In an embodiment, determining the priority of the CSI report according to the manner of acquiring the CSI in the CSI report includes calculating a third precoding according to the first precoding; calculating a fourth precoding according to the second precoding; determining a first evaluation metric performance according to the third precoding and the precoding in the CSI report corresponding to the specified manner; determining a second evaluation metric performance according to the fourth precoding and the precoding in the CSI report corresponding to the specified manner; in a case where the first evaluation metric performance is superior to the second evaluation metric performance, the priority of the first CSI report being higher than the priority of the second CSI report.

In an embodiment, determining the priority of the CSI report according to the manner of acquiring the CSI in the CSI report includes calculating a third precoding matrix according to the first precoding matrix; calculating a fourth precoding matrix according to the second precoding matrix; determining a first evaluation metric performance according to the third precoding matrix and the precoding matrix in the CSI report corresponding to the specified manner; determining a second evaluation metric performance according to the fourth precoding matrix and the precoding matrix in the CSI report corresponding to the specified manner; in a case where the first evaluation metric performance is superior to the second evaluation metric performance, the priority of the first CSI report being higher than the priority of the second CSI report.

One situation exemplarily is that the two manners may be separately compared with a specified manner, evaluation metric performance of the two manners is determined separately, and the priority of a CSI report is determined according to the evaluation metric performance of the two manners.

In an embodiment, operations of separately comparing the two manners with a specified manner, separately determining evaluation metric performance of the two manners, and determining the priority of a CSI report according to the evaluation metric performance of the two manners, may be performed by the second communication node or may be implemented by simulation of an execution process of the second communication node in the first communication node.

In an embodiment, CSI report 1 is a CSI report based on a codebook calculation manner, where the codebook calculation manner includes but is not limited to a Release-15 Type I codebook, Type II codebook, and Type II Port Selection codebook, a Release-16 Enhanced Type II codebook (eType II codebook) and Enhanced Type II Port Selection codebook, a Release-17 Further Enhanced Type II codebook, a Release-18 Enhanced Type II for CJT codebook, Further Enhanced Type II Port Selection for CJT codebook, Enhanced Type II for predicted PMI codebook, and Further Enhanced Type II Port Selection for predicted PMI codebook. CSI report 2 is a CSI report based on an artificial intelligence/machine learning model calculation manner. Serial numbers of the two reports are only used for descriptive distinction and do not represent any chronological order. When the base station configures the same reference signal resource measurement for the two reports, CSI (or precoding/a precoding matrix) acquired based on the artificial intelligence/machine learning model calculation manner and CSI (or precoding/a precoding matrix) acquired based on the codebook calculation manner are calculated based on the same channel coefficients. When CSI acquired based on a codebook manner with high precision/high parameter combination index/high feedback overhead/high received signal power (or precoding/a precoding matrix in a report based on a codebook manner with high precision/high parameter combination index/high feedback overhead/high received signal power) is used for monitoring CSI acquired based on the artificial intelligence/machine learning model calculation manner (or precoding/a precoding matrix in a report based on the artificial intelligence/machine learning model calculation manner), one situation exemplarily is that the second communication node calculates a fourth CSI according to a second CSI obtained based on an AI/ML model calculation manner (or calculates a fourth precoding/a fourth precoding matrix according to a second precoding/a second precoding matrix in a report based on an AI/ML model calculation manner), and calculates a third CSI according to a first CSI obtained based on the codebook manner (or calculates a third precoding/a third precoding matrix according to a first precoding/a first precoding matrix in a report based on the codebook manner). The preceding two CSIs or precodings/precoding matrices and the CSI obtained based on the codebook manner with high precision/high parameter combination index/high feedback overhead/high received signal power (or the precoding/precoding matrix in the report based on the codebook manner with high precision/high parameter combination index/high feedback overhead/high received signal power) are used to calculate evaluation metric performance (for example, correlation/similarity, error function, throughput, and/or spectral efficiency) to obtain evaluation metric performance 1 and evaluation metric performance 2, and the evaluation metric performance 1 is compared with the evaluation metric performance 2. If the evaluation metric performance 1 is superior to the evaluation metric performance 2, the CSI report based on the artificial intelligence/machine learning model calculation manner (that is, CSI report 2) is given a higher transmission priority; otherwise, if the evaluation metric performance 1 is inferior to the evaluation metric performance 2, the CSI report based on the codebook calculation manner (that is, CSI report 1) is given a higher transmission priority.

One situation exemplarily is that the second communication node calculates a fourth CSI according to a second CSI obtained based on an AI/ML model calculation manner (or calculates a fourth precoding/a fourth precoding matrix according to a second precoding/a second precoding matrix in a report based on an AI/ML model calculation manner), calculates evaluation metric performance (for example, correlation/similarity, error function, throughput, and/or spectral efficiency) for the calculated fourth CSI (or fourth precoding/fourth precoding matrix) and the CSI obtained based on the codebook manner with high precision/high parameter combination index/high feedback overhead/high received signal power (or the precoding/precoding matrix in the report based on the codebook manner with high precision/high parameter combination index/high feedback overhead/high received signal power), and compares the evaluation metric performance with a preset threshold. If the evaluation metric performance meets the requirement of the threshold (the evaluation metric performance may be higher than the preset threshold or lower than the preset threshold, where the requirement is related to a performance evaluation metric), the CSI report based on the artificial intelligence/machine learning model calculation manner (that is, CSI report 2) is given a higher transmission priority; otherwise, if the evaluation metric performance fails to meet the requirement of the threshold, the CSI report based on the codebook calculation manner (that is, CSI report 1) is given a higher transmission priority.

The manner of acquiring CSI with high precision/high parameter combination index/high feedback overhead/high received signal power (or a precoding/a precoding matrix with high precision/high parameter combination index/high feedback overhead/high received signal power) may be achieved through a codebook manner with high precision/high parameter combination index/high feedback overhead/high received signal power, but is not limited to other high-precision acquisition methods, for example, scalar quantization acquisition, differential quantization acquisition, and acquisition through an artificial intelligence/machine learning manner.

FIG. 2 is a diagram of a transmission process for a CSI report according to an embodiment. As shown in FIG. 2, the first communication node may acquire initial channel information and then feed back a first CSI based on an artificial intelligence/machine learning model. On this basis, the second communication node may determine a third CSI based on the artificial intelligence/machine learning model.

FIG. 3 is a diagram of another transmission process for a CSI report according to an embodiment. As shown in FIG. 3, the first communication node may acquire initial channel information and then determine a second CSI based on a codebook processing module. On this basis, the second communication node may determine a fourth CSI based on the codebook processing module.

FIG. 4 is a flowchart of yet another transmission process for a CSI report according to an embodiment. As shown in FIG. 4, the first communication node may acquire initial channel information and then determine CSI based on a high-precision processing module. On this basis, the second communication node may determine high-precision CSI based on the high-precision processing module.

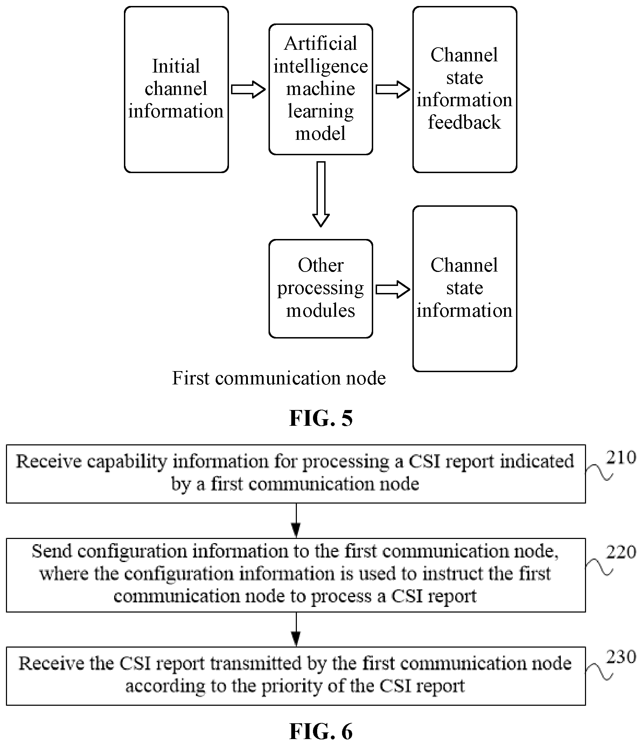

FIG. 5 is a diagram of still another transmission process for a CSI report according to an embodiment. As shown in FIG. 5, the first communication node may acquire initial channel information, then feed back a CSI report based on an artificial intelligence/machine learning model, and may also feed back a CSI report based on another processing module.

In an embodiment, the method also includes grouping CSI reports according to a manner of acquiring CSI, and determining the priority of a CSI report group according to identification information.

In an embodiment, grouping the CSI reports according to the manner of acquiring the CSI and determining the priority of the CSI report group according to the identification information includes grouping CSI reports calculated based on measurements of the same reference signal resource into a group, where CSI reports in a group have the same priority, and sorting priorities of CSI report groups according to identification information of the reference signal resource (that is, performing group priority sorting).

Table 1 describes priorities of CSI report groups based on reference signal resources. In an embodiment, when CSI-RS reference signal resource 1 is measured, a CSI report calculated based on a codebook manner and a CSI report calculated based on an AI/ML model manner are grouped into CSI report group 1, and when CSI-RS reference signal resource 2 is measured, a CSI report calculated based on an AI/ML model manner is grouped into CSI report group 2. Reports in each report group have the same priority, without priorities of multiple CSI reports inside the group being distinguished, and the number of CSI reports based on measurements of the same reference signal resource in a report group is greater than or equal to 1. If the ID of a reference signal resource corresponding to CSI report group 1 is smaller than the ID of a reference signal resource corresponding to CSI report group 2, CSI report group 1 has a higher priority; otherwise, a case where a larger ID has a higher priority is also applicable to the method. If a CSI report conflict occurs or transmission resources are limited and all CSI reports cannot be transmitted, a CSI report group with a lower priority is preferentially discarded.

Table 1 Priorities of CSI report groups based on reference signal resources

| Based on CSI-RS- Resource1 | Based on CSI-RS- Resource2 | ... | Based on CSI-RS- ResourceN |
|---|---|---|---|
| ↓ | ↓ | ↓ | ↓ |
| CSI Report Group 1 | CSI Report Group 2 | ... | CSI Report Group N |
| Codebook CSI Report | AI/ML CSI Report | ... | Codebook CSI Report |
| AI/ML CSI Report | ... | ... | AI/ML CSI Report |

In an embodiment, grouping the CSI reports according to the manner of acquiring the CSI and determining the priority of the CSI report group according to the identification information includes grouping CSI reports calculated based on measurements of the same reference signal resource into a group, where CSI reports in a group have the same priority, and sorting priorities of CSI report groups according to identification information of the CSI report (that is, performing group priority sorting).

Table 2 describes priorities of CSI report groups based on reference signal resources. In an embodiment, group priority sorting is performed according to the minimum ID of CSI reports in a CSI report group. When CSI-RS reference signal resource 1 is measured, a CSI report calculated based on a codebook manner and a CSI report calculated based on an AI/ML model manner are grouped into CSI report group 1, and when CSI-RS reference signal resource 2 is measured, a CSI report calculated based on the codebook manner and a CSI report calculated based on the AI/ML model manner are grouped into CSI report group 2. Reports in each report group have the same priority, without priorities of multiple CSI reports inside the group being distinguished, and the number of CSI reports based on measurements of the same reference signal resource in a report group is greater than or equal to 1. If the minimum ID of CSI reports included in CSI report group 1 is smaller than the minimum ID of CSI reports included in CSI report group 2, CSI report group 1 has a higher priority. If a CSI report conflict occurs or transmission resources are limited and all CSI reports cannot be transmitted, a CSI report group with a lower priority is preferentially discarded.

Table 2 Priorities of CSI report groups based on reference signal resources

| Based on CSI-RS-Resource1 | Based on CSI-RS-Resource2 |
|---|---|
| ↓ | ↓ |
| CSI Report Group 1 | CSI Report Group 2 |
| Codebook CSI Report ID: 1 | Codebook CSI Report ID: 3 |
| AI/ML CSI Report ID: 2 | AI/ML CSI Report ID: 4 |

Table 3 describes priorities of CSI report groups based on reference signal resources. In an embodiment, group priority sorting is performed according to the minimum ID of CSI reports based on a codebook manner in a CSI report group. When CSI-RS reference signal resource 1 is measured, a CSI report calculated based on the codebook manner and a CSI report calculated based on an AI/ML model manner are grouped into CSI report group 1, and when CSI-RS reference signal resource 2 is measured, a CSI report calculated based on the codebook manner and a CSI report calculated based on the AI/ML model manner are grouped into CSI report group 2. Reports in each report group have the same priority, without priorities of multiple CSI reports inside the group being distinguished, and the number of CSI reports based on measurements of the same reference signal resource in a report group is greater than or equal to 1. If the minimum ID of CSI reports based on the codebook manner included in CSI report group 1 is smaller than the minimum ID of CSI reports based on the codebook manner included in CSI report group 2, CSI report group 1 has a higher priority. If no CSI report based on the codebook manner exists in a CSI report group, the report group has a low priority. If a CSI report conflict occurs or transmission resources are limited and all CSI reports cannot be transmitted, a CSI report group with a lower priority is preferentially discarded.

Table 3 Priorities of CSI report groups based on reference signal resources

| Based on CSI-RS-Resource1 | Based on CSI-RS-Resource2 |
|---|---|
| ↓ | ↓ |
| CSI Report Group 1 | CSI Report Group 2 |
| Codebook CSI Report ID: 1 | Codebook CSI Report ID: 3 |
| AI/ML CSI Report ID: 2 | AI/ML CSI Report ID: 4 |

Table 4 describes priorities within CSI report groups based on reference signal resources. In an embodiment, group priority sorting is performed according to the minimum ID of CSI reports calculated based on an artificial intelligence/machine learning model manner in a CSI report group. When CSI-RS reference signal resource 1 is measured, a CSI report calculated based on a codebook manner and a CSI report calculated based on an AI/ML model manner are grouped into CSI report group 1, and when CSI-RS reference signal resource 2 is measured, a CSI report calculated based on the codebook manner and a CSI report calculated based on the artificial intelligence/machine learning model manner are grouped into CSI report group 2. Reports in each report group have the same priority, without priorities of multiple CSI reports inside the group being distinguished, and the number of CSI reports based on measurements of the same reference signal resource in a report group is greater than or equal to 1. If the minimum ID of CSI reports calculated based on the artificial intelligence/machine learning model manner included in CSI report group 1 is smaller than the minimum ID of CSI reports calculated based on the artificial intelligence/machine learning model manner included in CSI report group 2, CSI report group 1 has a higher priority. If no CSI report based on the artificial intelligence/machine learning model manner exists in a CSI report group, the report group has a low priority. If a CSI report conflict occurs or transmission resources are limited and all CSI reports cannot be transmitted, a CSI report group with a lower priority is preferentially discarded.

Table 4 Priorities within CSI report groups based on reference signal resources.

| Based on CSI-RS-Resource1 | Based on CSI-RS-Resource2 |
|---|---|
| ↓ | ↓ |
| CSI Report Group 1 | CSI Report Group 2 |
| Codebook CSI Report ID: 1 | Codebook CSI Report ID: 3 |
| AI/ML CSI Report ID: 2 | AI/ML CSI Report ID: 4 |

In an embodiment, grouping the CSI reports according to the manner of acquiring the CSI and determining the priority of the CSI report group according to the identification information includes grouping CSI reports calculated based on measurements of the same reference signal resource into a group, where CSI reports in a group have different priorities, and according to identification information of the CSI report, sorting priorities of CSI report groups and sorting priorities of CSI reports within a group.

One situation exemplarily is that CSI reports calculated based on measurements of the same reference signal resource are grouped into one group, but CSI reports in the group have different priorities, and group priority sorting and intra-group priority sorting are performed according to identification information of the CSI report. Inter-group grouping priorities and intra-group priorities may refer to a method of determining grouping priorities and intra-group priorities according to identification information of reference signal resources in any of the preceding embodiments.

In an embodiment, the method also includes determining the priority of the CSI report according to at least one of the following: an entity of the CSI report, content of the CSI report, the number of manners of acquiring CSI contained in the CSI report, a use or a function of the CSI, a manner of configuring the CSI report, a type of the CSI report, a period of the CSI report, a channel quality indicator, a signal to interference and noise ratio, a modulation and coding scheme (MCS) level, the number of parameter combinations, a parameter combination index, or feedback overhead.

In an embodiment, the priority of the CSI report is determined according to an entity of the CSI report or report content.

A method for processing the CSI report is that the priority of the CSI report is determined according to an entity of the CSI report or report content. One situation exemplarily is that a higher priority is given to CSI (or precoding/a precoding matrix) including a larger number of acquisition manners. For example, the content of CSI report 1 includes CSI calculated and acquired using M manners (or precoding/a precoding matrix calculated and acquired using M manners), and the content of CSI report 2 includes CSI calculated and acquired using N manners (or precoding/a precoding matrix calculated and acquired using N manners), where $M > N \geq 1$ Then, CSI report 1 is given a higher priority compared to CSI report 2, that is, CSI report 1 is preferentially transmitted. When transmission resources are limited and all CSI reports cannot be transmitted, a CSI report with a low priority is preferentially discarded/not transmitted.

In an embodiment, if CSI report 1 includes both CSI acquired based on a codebook manner (or precoding/a precoding matrix obtained based on a codebook manner) and CSI based on an artificial intelligence/machine learning model calculation manner (or precoding/a precoding matrix based on an AI/ML model calculation manner), and CSI report 2 only includes CSI acquired based on a codebook manner (or precoding/a precoding matrix obtained based on a codebook manner) or only includes CSI acquired based on an artificial intelligence/machine learning model calculation manner (or precoding/a precoding matrix obtained based on a codebook manner), CSI report 1 is given a higher priority compared to CSI report 2.

When the base station configures the same reference signal resource measurement for the two reports, CSI report 1 includes both CSI acquired based on a codebook manner (or precoding/a precoding matrix obtained based on a codebook manner) and CSI based on an artificial intelligence/machine learning model calculation manner (or precoding/a precoding matrix based on an artificial intelligence/machine learning model calculation manner) based on measurements of the same reference signal resource, and CSI report 2 only includes CSI acquired based on the codebook manner (or precoding/a precoding matrix obtained based on the codebook manner) or only includes CSI acquired based on the artificial intelligence/machine learning model calculation manner (or precoding/a precoding matrix obtained based on the codebook manner), CSI report 1 is given a higher priority compared to CSI report 2.

In an embodiment, the method also includes determining the priority of the CSI report according to the number of manners of acquiring CSI included in the CSI report.

One situation exemplarily is that a higher priority is given to CSI (or precoding/a precoding matrix) including a smaller number of acquisition manners. For example, the content of CSI report 1 includes CSI calculated and acquired using N manners (or precoding/a precoding matrix calculated and acquired using N manners), and the content of CSI report 2 includes CSI calculated and acquired using M manners (or precoding/a precoding matrix calculated and acquired using M manners), where $M > N > 1$. Then, CSI report 1 is given a higher priority compared to CSI report 2, that is, CSI report 1 is preferentially transmitted. When transmission resources are limited and all CSI reports cannot be transmitted, a CSI report with a low priority is preferentially discarded/not transmitted.

In an embodiment, if CSI report 1 includes both CSI acquired based on a codebook manner (or precoding/a precoding matrix obtained based on a codebook manner) and CSI based on an artificial intelligence/machine learning model calculation manner (or precoding/a precoding matrix based on an artificial intelligence/machine learning model calculation manner), and CSI report 2 only includes CSI acquired based on the codebook manner (or precoding/a precoding matrix obtained based on the codebook manner) or only includes CSI acquired based on the artificial intelligence/machine learning model calculation manner (or precoding/a precoding matrix obtained based on the codebook manner), CSI report 2 is given a higher priority compared to CSI report 1.

When the content of a first CSI report includes CSI calculated and acquired using M manners (or precoding/a precoding matrix calculated and acquired using M manners), and the content of a second CSI report includes CSI calculated and acquired using N manners (or precoding/a precoding matrix calculated and acquired using N manners), where $M > N > 1$, "first" and "second" are only used for descriptive distinction and do not represent any chronological order.

One situation exemplarily is that the priority of the CSI report is related to a manner of acquiring CSI.

In an embodiment, if CSI report 1 includes CSI acquired based on a codebook manner (or precoding/a precoding matrix obtained based on a codebook manner), and CSI report 2 does not include CSI acquired based on the codebook manner (or precoding/a precoding matrix obtained based on the codebook manner), CSI report 1 is given a higher priority. In an embodiment, if CSI report 1 includes CSI based on an artificial intelligence/machine learning model calculation manner (or precoding/a precoding matrix based on an artificial intelligence/machine learning model calculation manner), and CSI report 2 does not include CSI based on the artificial intelligence/machine learning model calculation manner (or precoding/a precoding matrix based on the artificial intelligence/machine learning model calculation manner), CSI report 1 is given a higher priority.

In an embodiment, if CSI report 1 includes high-precision CSI (or a high-precision precoding/precoding matrix), and CSI report 2 does not include high-precision CSI (or a high-precision precoding/precoding matrix), where a manner of acquiring high-precision CSI (or a high-precision precoding/precoding matrix) may include but is not limited to a codebook manner, CSI report 1 is given a higher priority.

In an embodiment, the method also includes determining the priority of the CSI report according to a use or a function of the CSI.

In this embodiment, the priority of the CSI report is related to a use/function of the CSI.

In an embodiment, if a CSI report includes CSI acquired based on a codebook manner with high precision/high parameter combination index/high feedback overhead/high received signal power (or precoding/a precoding matrix obtained based on a codebook manner with high precision/high parameter combination index/high feedback overhead/high received signal power), and the acquired CSI (or precoding/precoding matrix) is used as auxiliary information for calculating corresponding monitoring performance metrics or monitoring the performance of CSI based on an artificial intelligence/machine learning model calculation manner (or precoding/a precoding matrix based on an AI/ML model calculation manner), the CSI report is given a higher priority.

In an embodiment, if a CSI report includes channel state information obtained after the CSI is processed by calculation based on an artificial intelligence/machine learning model (or precoding/a precoding matrix is processed by calculation based on an artificial intelligence/machine learning model calculation manner, or CSI and precoding/a precoding matrix are calculated by an artificial intelligence/machine learning model), where the processing method includes a codebook manner with high precision/high parameter combination index/high feedback overhead/high received signal power, but is not limited to other acquisition manners of acquiring high precision, for example, scalar quantization acquisition, differential quantization acquisition, truncation, and padding (for example, padding zero and padding 1), and the channel state information serves as CSI inferred and calculated based on the artificial intelligence/machine learning model (or precoding/a precoding matrix inferred and calculated based on the artificial intelligence/machine learning model), the CSI report is given a higher priority.

In an embodiment, if a CSI report includes initial channel information, precoding/a precoding matrix calculated based on the initial channel information, CSI after the initial channel information is processed, or precoding/a precoding matrix obtained after the precoding/precoding matrix is processed, where the processing method includes a codebook manner with high precision/high parameter combination index/high feedback overhead/high received signal power, but is not limited to other acquisition manners of acquiring high precision, such as scalar quantization acquisition, differential quantization acquisition, and acquisition through an artificial intelligence/machine learning manner, and the preceding included content is used as auxiliary data for CSI based on an artificial intelligence/machine learning model (or precoding/a precoding matrix based on AI/ML model training) and for training or updating the model, or for fine-tuning model parameters, the CSI report is given a higher priority.

In an embodiment, the method also includes determining the priority of the CSI report according to at least one of the following: a manner of configuring the CSI report, a type of the CSI report, or a period of the CSI report.

In this embodiment, the priority of the CSI report is related to a manner of configuring the CSI report, a type of the CSI report, or a period of the CSI report.

In an embodiment, if CSI report 1 is an aperiodic report configured by a base station, and if CSI report 2 is a semi-persistent/periodic report configured by the base station, CSI report 1 is given a higher priority. In an embodiment, if CSI report 1 is a semi-persistent report configured by a base station, and if CSI report 2 is a periodic report configured by the base station, CSI report 1 is given a higher priority. In an embodiment, it is assumed that CSI report 1 is a periodic report configured by a base station with a period of T1 and CSI report 2 is also a periodic report configured by the base station with a period of T2; if the two reports are reported at the same time node/slot, a CSI report with a larger period has a higher priority. That is, if T1 > T2, CSI report 1 has a higher priority; otherwise, CSI report 2 has a higher priority.

In an embodiment, it is assumed that CSI report 1 is a periodic report configured by a base station with a period of T1 and CSI report 2 is also a periodic report configured by the base station with a period of T2; if the two reports are reported at the same time node/slot, a CSI report with a smaller period has a higher priority. That is, if T1 < T2, CSI report 1 has a higher priority; otherwise, CSI report 2 has a higher priority.

In an embodiment, the method also includes determining the priority of the CSI report according to at least one of the following of a precoding or a precoding matrix in the CSI report: a rank, a rank indicator, or the number of layers.

In this embodiment, the priority of the CSI report is related to a rank, a rank indicator (RI), or the number of layers of a precoding/a precoding matrix in the CSI report.

In an embodiment, if the rank of a precoding/a precoding matrix in CSI report 1 is greater than the rank of a precoding/a precoding matrix in CSI report 2, and for another example, if the RI in CSI report 1 is greater than the RI in CSI report 2, CSI report 1 is given a higher priority. For another example, if the number of layers of a precoding/a precoding matrix in report 1 is greater than the number of layers of a precoding/a precoding matrix in CSI report 2, CSI report 1 is given a higher priority.

In an embodiment, if the rank of a precoding/a precoding matrix in CSI report 1 is smaller than the rank of a precoding/a precoding matrix in CSI report 2, and for another example, if the RI in CSI report 1 is smaller than the RI in CSI report 2, CSI report 1 is given a higher priority. For another example, if the number of layers of a precoding/a precoding matrix in report 1 is smaller than the number of layers of a precoding/a precoding matrix in CSI report 2, CSI report 1 is given a higher priority.

In an embodiment, the method also includes determining the priority of the CSI report according to at least one of the following in the CSI report: a channel quality indicator, a signal to interference and noise ratio, or an MCS level.

In this embodiment, the priority of the CSI report is related to a channel quality indicator (CQI), an SINR, or an MCS level in the CSI report.

In an embodiment, if the CQI in CSI report 1 is greater than the CQI in CSI report 2, CSI report 1 is given a higher priority; otherwise, CSI report 2 is given a higher priority. For another example, if the SINR calculated in CSI report 1 is greater than the SINR calculated in CSI report 2, CSI report 1 is given a higher priority; otherwise, CSI report 2 is given a higher priority. For another example, if the MCS level calculated in CSI report 1 is greater than the MCS level calculated in CSI report 2, CSI report 1 is given a higher priority; otherwise, CSI report 2 is given a higher priority.

In an embodiment, if the CQI in CSI report 1 is smaller than the CQI in CSI report 2, CSI report 1 is given a higher priority; otherwise, CSI report 2 is given a higher priority. For another example, if the SINR calculated in CSI report 1 is smaller than the SINR calculated in CSI report 2, CSI report 1 is given a higher priority; otherwise, CSI report 2 is given a higher priority. For another example, if the MCS level calculated in CSI report 1 is smaller than the MCS level calculated in CSI report 2, CSI report 1 is given a higher priority; otherwise, CSI report 2 is given a higher priority.

In an embodiment, the method also includes determining the priority of the CSI report according to at least one of the following in the CSI report: the number of parameter combinations, a parameter combination index, or feedback overhead.

In this embodiment, the priority of the CSI report is related to the number of supported parameter combinations, a parameter combination index, or feedback overhead in the CSI report.

In an embodiment, if the number of parameter combinations supported by CSI obtained based on a codebook manner in CSI report 1 (or precoding/a precoding matrix obtained based on a codebook manner) is greater than the number of parameter combinations supported by CSI obtained based on the codebook manner in CSI report 2 (or precoding/a precoding matrix obtained based on the codebook manner), CSI report 1 is given a higher priority; otherwise, CSI report 2 is given a higher priority. For another example, if a parameter combination index adopted by CSI obtained based on the codebook manner in CSI report 1 (or precoding/a precoding matrix obtained based on the codebook manner) is greater than a parameter combination index adopted by CSI obtained based on the codebook manner in CSI report 2 (or precoding/a precoding matrix obtained based on the codebook manner), CSI report 1 is given a higher priority; otherwise, CSI report 2 is given a higher priority. For another example, if feedback overhead corresponding to a parameter combination adopted by CSI obtained based on the codebook manner in CSI report 1 (or precoding/a precoding matrix obtained based on the codebook manner) is greater than feedback overhead corresponding to a parameter combination adopted by CSI obtained based on the codebook manner in CSI report 2 (or precoding/a precoding matrix obtained based on the codebook manner), CSI report 1 is given a higher priority; otherwise, CSI report 2 is given a higher priority.

In an embodiment, if the number of parameter combinations supported by CSI obtained based on a codebook manner in CSI report 1 (or precoding/a precoding matrix obtained based on a codebook manner) is smaller than the number of parameter combinations supported by CSI obtained based on the codebook manner in CSI report 2 (or precoding/a precoding matrix obtained based on the codebook manner), CSI report 1 is given a higher priority; otherwise, CSI report 2 is given a higher priority. For another example, if a parameter combination index adopted by CSI obtained based on the codebook manner in CSI report 1 (or precoding/a precoding matrix obtained based on the codebook manner) is smaller than a parameter combination index adopted by CSI obtained based on the codebook manner in CSI report 2 (or precoding/a precoding matrix obtained based on the codebook manner), CSI report 1 is given a higher priority; otherwise, CSI report 2 is given a higher priority. For another example, if feedback overhead corresponding to a parameter combination adopted by CSI obtained based on the codebook manner in CSI report 1 (or precoding/a precoding matrix obtained based on the codebook manner) is smaller than feedback overhead corresponding to a parameter combination adopted by CSI obtained based on the codebook manner in CSI report 2 (or precoding/a precoding matrix obtained based on the codebook manner), CSI report 1 is given a higher priority; otherwise, CSI report 2 is given a higher priority. In an embodiment, if the number of parameter combinations supported by CSI obtained based on the codebook manner in a CSI report (or precoding/a precoding matrix obtained based on the codebook manner) is greater than a threshold of the number of supported parameter combinations, the CSI report is given a higher priority; otherwise, the case where the number of parameter combinations supported by CSI obtained based on the codebook manner in a CSI report (or precoding/a precoding matrix obtained based on the codebook manner) is smaller than a threshold of the number of supported parameter combinations is also applicable. For another example, if a parameter combination index adopted by CSI obtained based on the codebook manner in a CSI report (or precoding/a precoding matrix obtained based on the codebook manner) is greater than a certain parameter combination index X, the CSI report is given a higher priority. For example, a CSI report adopting a manner with a parameter combination greater than 6 for feedback has a higher priority than a CSI report using a codebook with a parameter combination smaller than 6 for feedback. For another example, if the maximum parameter combination index supported by CSI obtained based on the codebook manner in a CSI report (or precoding/a precoding matrix obtained based on the codebook manner) is greater than a certain parameter combination index X, the CSI report is given a higher priority. For example, the maximum parameter combination index supported by a CSI report is 8, greater than a manner with a parameter combination index of 6, and then the priority of the CSI report is higher than a CSI report using a codebook supporting the maximum parameter combination index smaller than 6 for feedback. Otherwise, the case where the maximum parameter combination index supported by CSI obtained based on the codebook manner in a CSI report (or precoding/a precoding matrix obtained based on the codebook manner) is smaller than a threshold is also applicable to the method.

In an embodiment, the method also includes determining the priority of the CSI report according to at least one of the following of an artificial intelligence or machine learning model in the CSI report: an identifier, a function, an applicable scenario, a feature, or a feature group.

In this embodiment, the priority of the CSI report is related to the ID of an artificial intelligence/machine learning model in the CSI report or a function, an applicable scenario, or a feature/feature group of an artificial intelligence/machine learning model.

In an embodiment, it is assumed that CSI in CSI report 1 is obtained based on artificial intelligence/machine learning model ID1 (or precoding/a precoding matrix is obtained based on an artificial intelligence/machine learning model ID1 manner), and CSI in CSI report 2 is obtained based on artificial intelligence/machine learning model ID2 (or precoding/a precoding matrix is obtained based on an artificial intelligence/machine learning model ID2 manner), where ID information may be a local ID or a global ID but is not limited to the two cases. If ID1 < ID2, CSI report 1 is given a higher priority; otherwise, CSI report 2 is given a higher priority. For another example, it is assumed that CSI in CSI report 1 is obtained based on a function ID1 of an artificial intelligence/machine learning model (or precoding/a precoding matrix is obtained based on a function ID1 manner of an artificial intelligence/machine learning model), and CSI in CSI report 2 is obtained based on a function ID2 of the artificial intelligence/machine learning model (or precoding/a precoding matrix is obtained based on a function ID2 manner of the artificial intelligence/machine learning model). If ID1 < ID2, CSI report 1 is given a higher priority; otherwise, CSI report 2 is given a higher priority. For another example, it is assumed that CSI in CSI report 1 is obtained based on an applicable scenario 1 of an artificial intelligence/machine learning model (or precoding/a precoding matrix is obtained based on an applicable scenario 1 manner of an artificial intelligence/machine learning model), and CSI in CSI report 2 is obtained based on an applicable scenario 2 of the artificial intelligence/machine learning model (or precoding/a precoding matrix is obtained based on an applicable scenario 2 manner of the artificial intelligence/machine learning model). The priority of a CSI report is determined according to the range of applicable scenarios. For example, a CSI report with a larger range of applicable scenarios has a higher priority. Alternatively, the priority of a CSI report is determined according to a matching degree of a current scenario. For example, a CSI report with a higher matching degree has a higher priority. Alternatively, the priority of a CSI report is determined according to aspects such as a scenario ID. For example, a CSI report with a smaller scenario ID has a higher priority, and vice versa. For another example, if CSI in CSI report 1 is obtained based on an applicable feature/feature group 1 of an artificial intelligence/-machine learning model (or precoding/a precoding matrix is obtained based on an applicable feature/feature group 1 manner of an artificial intelligence/machine learning model), and CSI in CSI report 2 is obtained based on an applicable feature/feature group 2 of the artificial intelligence/machine learning model (or precoding/a precoding matrix is obtained based on an applicable feature/feature group 2 manner of the artificial intelligence/machine learning model), the priority of a CSI report is determined according to the range of applicable features/feature groups, a matching degree of a current feature/feature group, or aspects such as a feature/feature group ID. For example, a CSI report with a smaller feature/feature group ID has a higher priority, and vice versa.

In an embodiment, it is assumed that CSI in CSI report 1 is obtained based on artificial intelligence/machine learning model ID1 (or precoding/a precoding matrix is obtained based on an artificial intelligence/machine learning model ID1 manner), and CSI in CSI report 2 is obtained based on artificial intelligence/machine learning model ID2 (or precoding/a precoding matrix is obtained based on an artificial intelligence/machine learning model ID2 manner), where ID information may be a local ID or a global ID but is not limited to the two cases. If ID1 > ID2, CSI report 1 is given a higher priority; otherwise, CSI report 2 is given a higher priority. For another example, it is assumed that CSI in CSI report 1 is obtained based on a function ID1 of an artificial intelligence/machine learning model (or precoding/a precoding matrix is obtained based on a function ID1 manner of an artificial intelligence/machine learning model), and CSI in CSI report 2 is obtained based on a function ID2 of the artificial intelligence/machine learning model (or precoding/a precoding matrix is obtained based on a function ID2 manner of the artificial intelligence/machine learning model). If ID1 > ID2, CSI report 1 is given a higher priority; otherwise, CSI report 2 is given a higher priority.

When a CSI report conflict/collision occurs or transmission resources are limited and all CSI reports cannot be transmitted, a CSI report with a low priority is preferentially discarded/not transmitted.

In this embodiment, a priority rule of a CSI report is determined according to a manner of acquiring CSI and entity content of the CSI report.

In an embodiment, a priority rule formula of a CSI report is as follows:

$$\mathrm{Pri}_{iCSI}(y,k,c,s) = A \cdot N_{cells} \cdot M_S \cdot y + N_{cells} \cdot M_S \cdot k + M_S \cdot c + s .$$

In the formula, $y$ is related to a manner/type of a CSI report, $y=0$ indicates that an aperiodic CSI report is carried on a physical uplink shared channel (PUSCH) for transmission, $y=1$ indicates that a semi-persistent CSI report is carried on a PUSCH for transmission, $y=2$ indicates that a semi-persistent CSI report is carried on a physical uplink control channel (PUCCH) for transmission, and $y=3$ indicates that a periodic CSI report is carried on a PUCCH for transmission. In the formula, $k$ is related to content in a CSI report, $k=0$ indicates that a CSI report carries L1-reference signal receiving power (L1-RSRP) or L1-SINR information, $k=1$ indicates that a CSI report based on an artificial intelligence/machine learning model (or a CSI report configured in an artificial intelligence/machine learning mode) carries L1-RSRP or L1-SINR information, $k=2$ indicates that a CSI report does not carry L1-RSRP or L1-SINR information, $k=3$ indicates that a CSI report based on an artificial intelligence/machine learning model (or a CSI report configured in an artificial intelligence/-machine learning mode) does not carry L1-RSRP or L1-SINR information, $k=4$ indicates a CSI report based on CJT or a CSI report configured in a CJT codebook mode (for example, a codebook type is typeII-CJT-r18), $k=5$ indicates a CSI report based on Doppler CSI (that is, a CSI report based on an enhanced Type II manner with a predicted PMI) or a CSI report configured in a Doppler codebook mode (for example, a codebook type is typeII-Doppler-r18)), and $k=6$ indicates other types of reports besides the preceding types of reports.

The preceding examples are not exhaustive. Values of $k$ and content in a CSI report are not limited to the types exemplarily listed above, and this method is applicable to all possible combinations of values of $k$ and report types. For example, $k=1$ may indicate that a CSI report based on an artificial intelligence/machine learning model carries L1-RSRP or L1-SINR information, or may indicate a CSI report based on CJT (or a CSI report configured in a CJT codebook mode), and so on.

In the formula, A is equal to the number of values that k may take (that is, if 6 possible values of $k$ exist, $A = 6$).

c is related to an index of a carrier, and $N_{cells}$ is the maximum number of carriers with a highest parameter configured by the higher layer.

s is related to an ID of a CSI report, and $M_s$ is the maximum number of configured CSI reports with a highest parameter configured by the higher layer.

In addition, considering that a CSI report based on a Doppler CSI prediction manner (that is, a CSI report based on an enhanced Type II manner with predicted PMI or a CSI report configured in a Doppler codebook mode) and a CSI report based on a CJT manner (a CSI report configured in a CJT codebook mode) may both be included in the types CSI reports, it is supplemented that CSI reports of these manners may also be combined in a CSI report without being separately split into independent entities.

In an embodiment, a priority rule formula of a CSI report is as follows:

$$\mathrm{Pri}_{iCSI}(x,y,k,c,s) = \alpha \cdot N_{cells} \cdot M_S \cdot M_x \cdot y + \beta \cdot N_{cells} \cdot M_S \cdot M_x \cdot x + N_{cells} \cdot M_S \cdot k + M_S \cdot c + s .$$

In the formula, $y$ is related to a manner/type of a CSI report, $y=0$ indicates that an aperiodic CSI report is carried on a PUSCH for transmission, $y=1$ indicates that a semi-persistent CSI report is carried on a PUSCH for transmission, $y=2$ indicates that a semi-persistent CSI report is carried on a PUCCH for transmission, $y=3$ indicates that a periodic CSI report is carried on a PUCCH for transmission, and $x$ is related to a manner of acquiring CSI. For example, $x=0$ indicates a CSI report based on a codebook manner, $x=1$ indicates a CSI report based on an artificial intelligence/machine learning model, and $x=2$ indicates a CSI report based on a CJT manner (a CSI report configured in a CJT codebook mode). For another example, $x=0$ indicates a CSI report based on an artificial intelligence/machine learning model, $x=1$ indicates a CSI report based on a codebook manner, $x=2$ indicates a CSI report based on a CJT manner (a CSI report configured in a CJT codebook mode), and $x=3$ indicates a CSI report based on a Doppler CSI prediction manner (that is, a CSI report based on an enhanced Type II manner with predicted PMI or a CSI report configured in a Doppler codebook mode (for example, a codebook type is typeII-Doppler-r18)). The preceding examples are not exhaustive. Values of $x$ and the manner of acquiring CSI are not limited to the types exemplarily listed above, and this method is applicable to all possible combinations of these situations. $M_x$ is the maximum number of reports for other manners of acquiring CSI with a highest parameter configured by the higher layer.

In addition, considering that a CSI report based on a Doppler CSI prediction manner (that is, a CSI report based on an enhanced Type II manner with predicted PMI or a CSI report configured in a Doppler codebook mode) and a CSI report based on a CJT manner (a CSI report configured in a CJT codebook mode) may both be included in the types CSI reports, it is supplemented that CSI reports of these manners may also be combined in a CSI report without being separately split into independent entities.

$k$ is related to the content in a CSI report, $k=0$ indicates that a CSI report carries L1-RSRP or L1-SINR information, and $k=1$ indicates that a CSI report does not carry L1-RSRP or L1-SINR information. $c$ is related to an index of a carrier, and $N_{cells}$ is the maximum number of carriers with a highest parameter configured by the higher layer. $s$ is related to an ID of a CSI report, and $M_s$ is the maximum number of configured CSI reports with a highest parameter configured by the higher layer.

In the formula, $\alpha$ is equal to the number of values that $x$ may take (that is, if 3 possible values of $x$ exist, $\alpha = 3$). In the formula, $\beta$ is equal to the number of values that $k$ may take (that is, if 2 possible values of $k$ exist, $\beta = 2$).

In an embodiment, a priority rule formula of a CSI report is as follows:

$$\mathrm{Pri}_{iCSI}(x,y,k,c,s) = \alpha \cdot N_{cells} \cdot M_S \cdot M_x \cdot y + \beta \cdot N_{cells} \cdot M_S \cdot M_x \cdot x + N_{cells} \cdot M_S \cdot k + M_S \cdot c + s$$

In the formula, $y$ is related to a manner/type of a CSI report, $y=0$ indicates that an aperiodic CSI report is carried on a PUSCH for transmission, $y=1$ indicates that a semi-persistent CSI report is carried on a PUSCH for transmission, $y=2$ indicates that a semi-persistent CSI report is carried on a PUCCH for transmission, $y=3$ indicates that a periodic CSI report is carried on a PUCCH for transmission, and $x$ is related to the content in a CSI report under other acquisition manners. For example, $x=0$ indicates that a CSI report based on an artificial intelligence/machine learning model carries L1-RSRP or L1-SINR information, $x=1$ indicates that a CSI report based on an artificial intelligence/machine learning model does not carry L1-RSRP or L1-SINR information, $x=2$ indicates that a CSI report based on CJT (a CSI report configured in a CJT codebook mode) carries L1-RSRP or L1-SINR information, $x=3$ indicates that a CSI report based on CJT (a CSI report configured in a CJT codebook mode) does not carry L1-RSRP or L1-SINR information, $x=4$ indicates that a CSI report based on a Doppler CSI prediction manner (that is, a CSI report based on an enhanced Type II manner with predicted PMI or a CSI report configured in a Doppler codebook mode (for example, a codebook type is typeII-Doppler-r18)) carries L1-RSRP or L1-SINR information, and $x=5$ indicates that a CSI report based on a Doppler CSI prediction manner (that is, a CSI report based on an enhanced Type II manner with predicted PMI or a CSI report configured in a Doppler codebook mode (for example, a codebook type is typeII-Doppler-r18)) does not carry L1-RSRP or L1-SINR information. The preceding examples are not exhaustive. Values of $x$ and the manner of acquiring CSI are not limited to the types exemplarily listed above, and this method is applicable to all combinations of values of $x$ and manners of acquiring CSI. $M_x$ is the maximum number of reports for other manners of acquiring CSI with a highest parameter configured by the higher layer.

$k$ is related to the content in a CSI report, $k=0$ indicates that a CSI report carries L1-RSRP or L1-SINR information, and $k=1$ indicates that a CSI report does not carry L1-RSRP or L1-SINR information. $c$ is related to an index of a carrier, and $N_{cells}$ is the maximum number of carriers with a highest parameter configured by the higher layer. $s$ is related to an ID of a CSI report, and $M_s$ is the maximum number of configured CSI reports with a highest parameter configured by the higher layer.

In the formula, $\alpha$ is equal to the number of values that $x$ may take (that is, if 4 possible values of $x$ exist, $\alpha = 4$). In the formula, $\beta$ is equal to the number of values that $k$ may take (that is, if 2 possible values of $k$ exist, $\beta = 2$).

In an embodiment, a priority rule formula of a CSI report is as follows:

$$\mathrm{Pri}_{iCSI}(x,y,k,c,s) = \alpha \cdot N_{cells} \cdot M_S \cdot M_x \cdot y + \beta \cdot N_{cells} \cdot M_S \cdot M_x \cdot k + M_S \cdot M_x \cdot x + M_S \cdot c + s$$

In the formula, $y$ is related to a manner/type of a CSI report, $y=0$ indicates that an aperiodic CSI report is carried on a PUSCH for transmission, $y=1$ indicates that a semi-persistent CSI report is carried on a PUSCH for transmission, $y=2$ indicates that a semi-persistent CSI report is carried on a PUCCH for transmission, and $y=3$ indicates that a periodic CSI report is carried on a PUCCH for transmission; $k$ is related to the content in a CSI report, $k=0$ indicates that a CSI report carries L1-RSRP or L1-SINR information, and $k=1$ indicates that a CSI report does not carry L1-RSRP or L1-SINR information; and $x$ is related to a manner of acquiring CSI. For example, $x=0$ indicates a CSI report based on a codebook manner, $x=1$ indicates a CSI report based on an artificial intelligence/machine learning model, $x=2$ indicates a CSI report based on a Doppler CSI prediction manner (that is, a CSI report based on an enhanced Type II manner with predicted PMI or a CSI report configured in a Doppler codebook mode), and $x=3$ indicates a CSI report based on a CJT manner (a CSI report configured in a CJT codebook mode). For another example, $x=0$ indicates a CSI report based on a codebook manner, $x=1$ indicates a CSI report based on an artificial intelligence/machine learning model, $x=2$ indicates a CSI report based on a CJT manner (a CSI report configured in a CJT codebook mode), and $x=3$ indicates a CSI report based on a Doppler CSI prediction manner (that is, a CSI report based on an enhanced Type II manner with predicted PMI or a CSI report configured in a Doppler codebook mode). For another example, $x=0$ indicates a CSI report based on an artificial intelligence/machine learning model, $x=1$ indicates a CSI report based on a codebook manner, $x=2$ indicates a CSI report based on a CJT manner (a CSI report configured in a CJT codebook mode), and $x=3$ indicates a CSI report based on a Doppler CSI prediction manner (that is, a CSI report based on an enhanced Type II manner with predicted PMI or a CSI report configured in a Doppler codebook mode). For another example, $x=0$ indicates a CSI report based on an artificial intelligence/machine learning model, $x=1$ indicates a CSI report based on a codebook manner, $x=2$ indicates a CSI report based on a Doppler CSI prediction manner (that is, a CSI report based on an enhanced Type II manner with predicted PMI or a CSI report configured in a Doppler codebook mode), and $x=3$ indicates a CSI report based on a CJT manner (a CSI report configured in a CJT codebook mode). For another example, $x=0$ indicates a CSI report based on a codebook manner, $x=1$ indicates a CSI report based on a CJT manner (a CSI report configured in a CJT codebook mode), $x=2$ indicates a CSI report based on a Doppler CSI prediction manner (that is, a CSI report based on an enhanced Type II manner with predicted PMI or a CSI report configured in a Doppler codebook mode), and $x=3$ indicates a CSI report based on an artificial intelligence/machine learning model. For another example, $x=0$ indicates a CSI report based on a codebook manner, $x=1$ indicates a CSI report based on a Doppler CSI prediction manner (that is, a CSI report based on an enhanced Type II manner with predicted PMI or a CSI report configured in a Doppler codebook mode), $x=2$ indicates a CSI report based on a CJT manner (a CSI report configured in a CJT codebook mode), and $x=3$ indicates a CSI report based on an artificial intelligence/machine learning model. The preceding examples are not exhaustive. Values of $x$ and the manner of acquiring CSI are not limited to the types exemplarily listed above, and this method is applicable to all combinations of values of $x$ and manners of acquiring CSI. $M_x$ is the maximum number of reports for other manners of acquiring CSI with a highest parameter configured by the higher layer.

In addition, considering that a CSI report based on a Doppler CSI prediction manner (that is, a CSI report based on an enhanced Type II manner with predicted PMI or a CSI report configured in a Doppler codebook mode) and a CSI report based on a CJT manner (a CSI report configured in a CJT codebook mode) may both be included in the types CSI reports, it is supplemented that CSI reports of these manners may also be combined in a CSI report without being separately split into independent entities.

c is related to an index of a carrier, and $N_{cells}$ is the maximum number of carriers with a highest parameter configured by the higher layer. s is related to an ID of a CSI report, and $M_s$ is the maximum number of configured CSI reports with a highest parameter configured by the higher layer. In the formula, $\alpha$ is equal to the number of values that $k$ may take (that is, if 2 possible values of $k$ exist, $\alpha = 2$). In the formula, $\beta$ is equal to the number of values that $x$ may take (that is, if 3 possible values of x exist, $\beta = 3$).

In an embodiment, a priority rule formula of a CSI report is as follows:

$$\mathrm{Pri}_{iCSI}(x,y,k,c,s) = \alpha \cdot N_{cells} \cdot M_S \cdot M_x \cdot y + \beta \cdot N_{cells} \cdot M_S \cdot M_x \cdot k + M_S \cdot M_x \cdot x + M_S \cdot c + s .$$

In the formula, $y$ is related to a manner/type of a CSI report, $y=0$ indicates that an aperiodic CSI report is carried on a PUSCH for transmission, $y=1$ indicates that a semi-persistent CSI report is carried on a PUSCH for transmission, $y=2$ indicates that a semi-persistent CSI report is carried on a PUCCH for transmission, and $y=3$ indicates that a periodic CSI report is carried on a PUCCH for transmission; $k$ is related to the content in a CSI report, $k=0$ indicates that a CSI report carries L1-RSRP or L1-SINR information, and $k=1$ indicates that a CSI report does not carry L1-RSRP or L1-SINR information; and $x$ is related to content in a CSI report under other acquisition manners. For example, $x=0$ indicates that a CSI report based on an artificial intelligence/machine learning model carries L1-RSRP or L1-SINR information, $x=1$ indicates that a CSI report based on an artificial intelligence/machine learning model does not carry L1-RSRP or L1-SINR information, $x=2$ indicates that a CSI report based on CJT (a CSI report configured in a CJT codebook mode) carries L1-RSRP or L1-SINR information, $x=3$ indicates that a CSI report based on CJT (a CSI report configured in a CJT codebook mode) does not carry L1-RSRP or L1-SINR information, $x=3$ indicates that a CSI report based on a Doppler CSI prediction manner (that is, a CSI report based on an enhanced Type II manner with predicted PMI or a CSI report configured in a Doppler codebook mode) carries L1-RSRP or L1-SINR information, and $x=4$ indicates that a CSI report based on a Doppler CSI prediction manner (that is, a CSI report based on an enhanced Type II manner with predicted PMI or a CSI report configured in a Doppler codebook mode) does not carry L1-RSRP or L1-SINR information. The preceding examples are not exhaustive. Values of $x$ and the manner of acquiring CSI are not limited to the types exemplarily listed above, and this method is applicable to all combinations of values of $x$ and manners of acquiring CSI. $M_x$ is the maximum number of reports for other manners of acquiring CSI with a highest parameter configured by the higher layer.

c is related to an index of a carrier, and $N_{cells}$ is the maximum number of carriers with a highest parameter configured by the higher layer.

s is related to an ID of a CSI report, and $M_s$ is the maximum number of configured CSI reports with a highest parameter configured by the higher layer.

In the formula, $\alpha$ is equal to the number of values that $k$ may take (that is, if 2 possible values of $k$ exist, $\alpha = 2$). In the formula, $\beta$ is equal to the number of values that $x$ may take (that is, if 4 possible values of x exist, $\beta = 4$).

In the embodiments of the present application, the priority of a CSI report corresponding to different manners may be determined by the first communication node, or the priority of a CSI report corresponding to different manners may be determined by the second communication node. The method for determining the priority of a CSI report in any of the preceding embodiments may be performed by the first communication node or by the second communication node.

In an embodiment, the method also includes for at least one CSI-RS resource or each CSI-RS resource in one or multiple CSI-RS resource sets, transmitting the CSI report to the second communication node in a case where at least X CSI-RS transmission occasions are received; and discarding the CSI report in a case where X CSI-RS transmission occasions are not received.

Discarding a CSI report may refer to no transmission of the CSI report.

A processing method for a CSI report is as follows: After CSI report configuration/reconfiguration, serving cell activation, bandwidth part (BWP) change, or semi-persistent CSI (SP-CSI) activation, for each or at least one CSI-RS resource in one or multiple CSI-RS resource sets, the first communication node (terminal) reports CSI only after receiving at least X CSI-RS transmission occasions; otherwise, the CSI report is discarded. The first communication node (terminal) needs to receive CSI-RS transmission opportunities within activated discontinuous reception time (DRX Active Time), and the first communication node may receive CSI-RS transmission occasions in the same DRX Active Time or in different DRX Active Times. Measurement of a reference signal by the first communication node (terminal) should not be later than a CSI reference resource.

In an embodiment, X satisfies at least one of the following:

For a CSI report based on CJT or a CSI report configured in a CJT mode, X is 1. In a case where discontinuous reception is configured and a CJT mode is configured, X is 1. In a case where discontinuous reception is configured and the CSI report is configured with NTRP CSI-RS resources, X is 1. In a case where discontinuous reception is configured, the CSI report is configured with X CSI-RS resources, and X is greater than or equal to NT, X is 1. For a CSI report based on an enhanced manner of a predicted precoding matrix indicator or a CSI report configured in a Doppler codebook mode, the X CSI-RS transmission occasions are continuous or discontinuous. For a periodic or semi-persistent CSI-RS, X is determined according to the capability of the first communication node, or is a fixed value, or is determined according to the number of activated periodic or semi-persistent CSI-RS resources. For an aperiodic CSI-RS, X is 1, or is determined according to the capability of the first communication node, or is a fixed value. For CSI calculation based on an artificial intelligence or machine learning model manner, or in a case configured in an artificial intelligence or machine learning mode, for a periodic or semi-persistent CSI-RS, X is determined according to the capability of the first communication node, or is determined according to the number of activated periodic or semi-persistent CSI-RS resources, or is a fixed value. For CSI calculation based on an artificial intelligence or machine learning model manner, or in a case configured in an artificial intelligence or machine learning mode, for an aperiodic CSI-RS, X is 1, or is determined according to the capability of the first communication node, or is a fixed value. For a time domain channel property (TDCP) mode being configured or a reporting entity being configured in a TDCP mode, X is 1.

A method for processing a CSI report based on CJT (or a CSI report configured in a CJT mode) is that for each or at least one CSI-RS resource in one or multiple CSI-RS resource sets, the first communication node (terminal) receives at least one CSI-RS transmission occasion, where measurement of a reference signal by the first communication node (terminal) should not be later than a CSI reference resource.

One method is that when discontinuous reception is configured, in a case where a CJT mode is configured/enabled in a CSI report configuration (for example, a codebook type is typeII-CJT-r18), for each or at least one CSI-RS resource in one or multiple CSI-RS resource sets, the first communication node (terminal) reports CSI only when it receives at least one CSI-RS transmission occasion; otherwise, the CSI report is discarded.

One method is that when DRX is configured and a CSI report is configured with NTRP CSI-RS resources, for each or at least one CSI-RS resource in one or multiple CSI-RS resource sets, the first communication node (terminal) reports CSI only when it receives at least one CSI-RS transmission occasion; otherwise, the CSI report is discarded. NTRP is the number of second communication nodes (TRPs) supported by CJT.

One method is that when DRX is configured, a CSI report is configured with X CSI-RS resources, and X is greater than or equal to NT, for each or at least one CSI-RS resource in one or multiple CSI-RS resource sets, the first communication node (terminal) reports CSI only when it receives at least one CSI-RS transmission occasion; otherwise, the CSI report is discarded. NT is a set threshold of the number of CSI-RS resources.

The preceding methods can be applied as long as at least one of the conditions is satisfied, and the method with simultaneous satisfaction of multiple conditions can also be applied.

A method for processing a CSI report based on Doppler CSI (that is, a CSI report based on an enhanced Type II manner with a predicted PMI or a CSI report configured in a Doppler codebook mode (for example, a codebook type is typeII-Doppler-r18)) is that for each or at least one CSI-RS resource in one or multiple CSI-RS resource sets, the first communication node (terminal) reports CSI only when it receives at least X CSI-RS transmission occasions; otherwise, the CSI report is discarded. Measurement of a reference signal by the first communication node (terminal) should not be later than a CSI reference resource, and X CSI-RS transmission occasions may be continuous or discontinuous.

One method is that for a periodic or semi-persistent CSI-RS, the number of X is determined according to the capability of the first communication node (terminal capability). For example, $X = K_p$, where $K_p$ is the number of activated periodic/semi-persistent CSI-RS resources, and values may be 1, 2, or 4. For a periodic or semi-persistent CSI-RS, the number of X may also be a fixed value, for example, X = 2.

One method is that for an aperiodic CSI-RS, the number of X is 1. That is, K CSI-RS resources are included, where K is the number of aperiodic CSI-RS resources, and values may be 4, 8, or 12. For an aperiodic CSI-RS, the number of X may also be determined according to the capability of the first communication node (terminal capability). For an aperiodic CSI-RS, the number of X may also be a fixed value.

A method for processing a CSI report based on the time domain channel property (TDCP) (or a CSI report configured in a TDCP mode) is that for each or at least one CSI-RS resource in one or multiple CSI-RS resource sets, the first communication node (terminal) reports CSI only when it receives at least X CSI-RS transmission occasions; otherwise, the CSI report is discarded. Measurement of a reference signal by the first communication node (terminal) should not be later than a CSI reference resource.

One method is that for a case where a TDCP mode is configured/a report entity is configured in a TDCP mode, the number of X is 1. For a case where a TDCP mode is configured, the number of X may also be determined according to the capability of the first communication node (terminal capability). For a case where a TDCP mode is configured, the number of X can also be a fixed value.

A method for processing a CSI report calculated based on an artificial intelligence/machine learning model manner (a CSI report configured in an artificial intelligence/machine learning mode) is that for each or at least one CSI-RS resource in one or multiple CSI-RS resource sets, the first communication node (terminal) reports CSI only when it receives at least X CSI-RS transmission occasions; otherwise, the CSI report is discarded. Measurement of a reference signal by the first communication node (terminal) should not be later than a CSI reference resource, and X CSI-RS transmission occasions may be continuous or discontinuous.

One method is that when CSI calculation is based on an artificial intelligence/machine learning model manner or an artificial intelligence/machine learning mode is configured, for a periodic or semi-persistent CSI-RS, the number of X is determined according to the capability of the first communication node (terminal capability). For example, X = Km, where Km is the number of activated periodic/semi-persistent CSI-RS resources, and values of Km may include but are not limited to a positive integer value from 1 to 10. For a periodic or semi-persistent CSI-RS, the number of X may also be a fixed value, for example, X = 5.

One method is that when CSI calculation is based on an artificial intelligence/machine learning model manner or an artificial intelligence/machine learning mode is configured, for an aperiodic CSI-RS, the number of X is 1. That is, N CSI-RS resources are included, where values of N may include but are not limited to an integer from 1 to 15. The number of X may also be determined according to the capability of the first communication node (terminal capability). For an aperiodic CSI-RS, the number of X may also be a fixed value.

In an embodiment, the CSI calculation time or a feedback delay is determined according to at least one of the following: the capability of the first communication node, the number of second communication nodes, a type of a reference signal, the number of aperiodic CSI-RS resources, an offset between two CSI-RS resources, the number of symbols in one slot, the number of precodings or precoding matrices, the length of an observation window, a first parameter, or a second parameter.

In an embodiment, the first parameter is determined according to at least one of the following: the number of configured second communication nodes, a subcarrier spacing index, the capability of the first communication node, or the length of a discrete Fourier transform (DFT) vector.

In an embodiment, the second parameter is determined according to at least one of the following: the number of activated periodic or semi-persistent CSI-RS resources, a period of a CSI-RS, or the number of symbols in one slot.

A processing method for a CSI report is that the determination of the CSI calculation time/feedback delay Z and Z' of the first communication node (terminal) is related to the capability of the first communication node (terminal capability).

A method for determining the CSI calculation time/feedback delay Z and Z' for a CSI report based on CJT (or a CSI report configured in a CJT codebook mode) is related to the capability of the first communication node (terminal capability).

One method for determining Z/Z' is that the determination of Z/Z' is related to the number NTRP of configured second communication nodes (TRPs).

When NTRP = 1, the value of Z/Z' is a fixed value (may be a legacy value, that is, legacy Z/Z'). When NTRP > 1, the value of Z/Z' is related to the capability of the first communication node (terminal capability).

Capability 1: The value of Z/Z' is a fixed value (may be a legacy value, that is, legacy Z/Z'). Capability 2: The value of Z/Z' is a fixed Z/Z' + r. A fixed Z/Z' value is a legacy value, and r is the first parameter, a value greater than 0, and is related to the number NTRP of configured second communication nodes (TRPs).

The value of r is also related to the capability of the first communication node (terminal capability). One method for determining r is related to at least one of subcarrier spacing, the number of second communication nodes (TRPs), and terminal capability.

In an example, $r = X \cdot (\mu+1) \cdot NTRP$, where X is a fixed value (X may be equal to 1 or not equal to 1) or the value of X depends on terminal capability, $\mu$ is an index of subcarrier spacing, and NTRP is the number of second communication nodes (TRPs).

A method for determining the CSI calculation time/feedback delay Z and Z' for a CSI report based on Doppler CSI (that is, a CSI report based on an enhanced Type II manner with a predicted PMI or a CSI report configured in a Doppler codebook mode (for example, a codebook type is typeII-Doppler-r18)) is related to the capability of the first communication node (terminal capability).

One method for determining Z' is that the determination of Z' is related to the length N4 of a DFT vector.

When N4 = 1, the value of Z' is a fixed value (may be a legacy value, that is, legacy Z'). When N4 > 1, the value of Z' is related to the capability of the first communication node (terminal capability).

Capability 1: The value of Z' is a fixed value (may be a legacy value, that is, legacy Z'). Capability 2: The value of Z' is a fixed Z' + r. A fixed Z' value is a legacy value, and r is a value greater than 0 and related to the length of configured N4.

The value of r is also related to the capability of the first communication node (terminal capability). One method for determining r is related to at least one of subcarrier spacing, the length N4 of a DFT vector, and terminal capability.

In an example, $r = X \cdot (\mu+1) \cdot N4$, where X is a fixed value (X may be equal to 1 or not equal to 1) or the value of X depends on terminal capability, $\mu$ is an index of subcarrier spacing, and N4 is the length of a DFT vector. The value of r is independently provided for each value of N4.

One method for determining Z is that the determination of Z is related to the capability of the first communication node (terminal capability) and a type of a reference signal (for example, CSI-RS).

Capability 1

When the type of the reference signal is an aperiodic CSI-RS, the value of Z is related to at least one of the number K of aperiodic CSI-RS resources, an offset m between two CSI-RS resources, and the number of symbols in one slot. In an example, $Z = legacy\ Z + 14 \cdot (K-1) \cdot m$, where K is the number of aperiodic CSI-RS resources, and m is an offset between two aperiodic CSI-RS resources.

When the type of the reference signal is a periodic/semi-persistent CSI-RS, the value of Z is related to at least one of the number Kp of activated periodic/semi-persistent CSI-RS resources, the period d of a CSI-RS, and the number of symbols in one slot. In an example, $Z = legacy\ Z + w$, where w is the second parameter, the value of w is related to at least one of the number Kp of activated periodic/semi-persistent CSI-RS resources, the period d of a CSI-RS, and the number of symbols in one slot; $w = 14 \cdot (K_P-1) \cdot d$, where Kp is the number of activated periodic/semi-persistent CSI-RS resources, and d is the period of a CSI-RS.

Capability 2

When the type of the reference signal is an aperiodic CSI-RS, the value of Z is related to at least one of the number K of aperiodic CSI-RS resources, an offset m between two CSI-RS resources, the number of symbols in one slot, and r in the preceding method for determining Z' (that is, related to the capability of the first communication node (terminal capability)). In an example, $Z = legacy\ Z + 14 \cdot (K-1) \cdot m + r$, where K is the number of aperiodic CSI-RS resources, m is an offset between two aperiodic CSI-RS resources, and r is an extension parameter related to the capability of the first communication node (terminal capability).

The value of r may be that $r = X \cdot (\mu+ 1) \cdot N4$, where X is a fixed value (X may be equal to 1 or not equal to 1) or the value of X depends on terminal capability, $\mu$ is an index of subcarrier spacing, and N4 is the length of a DFT vector. The value of r is independently provided for each value of N4.

When the type of the reference signal is a periodic/semi-persistent CSI-RS, the value of Z is related to at least one of the number Kp of activated periodic/semi-persistent CSI-RS resources, the period d of a CSI-RS, the number of symbols in one slot, and r in the preceding method for determining Z' (that is, related to the capability of the first communication node (terminal capability)). In an example, $Z = legacy\ Z + w + r$, where the value of w is related to at least one of the number Kp of activated periodic/semi-persistent CSI-RS resources, the period d of a CSI-RS, and the number of symbols in one slot; $w = 14 \cdot (K_P-1) \cdot d$, where Kp is the number of activated periodic/semi-persistent CSI-RS resources, and d is the period of a CSI-RS. The value of r may be that $r = X \cdot (\mu+1) \cdot N4$, where X is a fixed value (X may be equal to 1 or not equal to 1) or the value of X depends on terminal capability, $\mu$ is an index of subcarrier spacing, and N4 is the length of a DFT vector. The value of r is independently provided for each value of N4. A method for determining the CSI calculation time/feedback delay Z and Z' for a CSI report calculated based on an artificial intelligence/machine learning model manner (a CSI report configured in an artificial intelligence/machine learning mode) is related to the capability of the first communication node (terminal capability).

One method for determining Z' is that the determination of Z' is related to the number P of input precodings/precoding matrices or the length W of an observation window.

When P = 1 or W = 1, the value of Z' is a fixed value (may be a legacy value, that is, legacy Z'). When P > 1 or W > 1, the value of Z' is related to the capability of the first communication node (terminal capability).

Capability 1: The value of Z' is a fixed value (may be a legacy value, that is, legacy Z'). Capability 2: The value of Z' is a fixed Z' + r. A fixed Z' value is a legacy value, and r is a value greater than 0.

The value of r is also related to the capability of the first communication node (terminal capability). One method for determining r is related to at least one of subcarrier spacing, the number P of input precodings, and terminal capability.

In an example, $r = X \cdot (\mu+1) \cdot P$, where X is a fixed value (X may be equal to 1 or not equal to 1) or the value of X depends on terminal capability, $\mu$ is an index of subcarrier spacing, and P is the number of input precodings. The value of r is independently provided for each value of P.

The value of r is also related to the capability of the first communication node (terminal capability). One method for determining r is related to at least one of subcarrier spacing, the length W of an observation window, and terminal capability.

In an example, $r = X \cdot (\mu+1) \cdot W$, where X is a fixed value (X may be equal to 1 or not equal to 1) or the value of X depends on terminal capability, $\mu$ is an index of subcarrier spacing, and W is the length of an observation window. The value of r is independently provided for each value of W.

One method for determining Z is that the determination of Z is related to the capability of the first communication node (terminal capability) and a type of a reference signal (for example, CSI-RS).

Capability 1

When the type of the reference signal is an aperiodic CSI-RS, the value of Z is related to at least one of the number K of aperiodic CSI-RS resources, an offset m between two CSI-RS resources, and the number of symbols in one slot. In an example, $Z = \text{legacy } Z + 14 \cdot (K-1) \cdot m$, where K is the number of aperiodic CSI-RS resources, and m is an offset between two aperiodic CSI-RS resources.

When the type of the reference signal is a periodic/semi-persistent CSI-RS, the value of Z is related to at least one of the number Kp of activated periodic/semi-persistent CSI-RS resources, the period d of a CSI-RS, and the number of symbols in one slot. In an example, $Z = \text{legacy } Z + w$, where the value of w is related to at least one of the number Kp of activated periodic/semi-persistent CSI-RS resources, the period d of a CSI-RS, and the number of symbols in one slot; $w = 14 \cdot (K_P-1) \cdot d$, where Kp is the number of activated periodic/semi-persistent CSI-RS resources, and d is the period of a CSI-RS.

Capability 2

When the type of the reference signal is an aperiodic CSI-RS, the value of Z is related to at least one of the number K of aperiodic CSI-RS resources, an offset m between two CSI-RS resources, the number of symbols in one slot, and r in the preceding method for determining Z' (that is, related to the capability of the first communication node (terminal capability)). In an example, $Z = \text{legacy } Z + 14 \cdot (K-1) \cdot m + r$, where K is the number of aperiodic CSI-RS resources, m is an offset between two aperiodic CSI-RS resources, and r is an extension parameter related to the capability of the first communication node (terminal capability).

The value of r may be that $r = X \cdot (\mu+1) \cdot P$, where X is a fixed value (X may be equal to 1 or not equal to 1) or the value of X depends on terminal capability, $\mu$ is an index of subcarrier spacing, and P is the number of input precodings. The value of r is independently provided for each value of P.

The value of r may be that $r = X \cdot (\mu+1) - W$, where X is a fixed value (X may be equal to 1 or not equal to 1) or the value of X depends on terminal capability, $\mu$ is an index of subcarrier spacing, and W is the length of an observation window. The value of r is independently provided for each value of W.

When the type of the reference signal is a periodic/semi-persistent CSI-RS, the value of Z is related to at least one of the number Kp of activated periodic/semi-persistent CSI-RS resources, the period d of a CSI-RS, the number of symbols in one slot, and r in the preceding method for determining Z' (that is, related to the capability of the first communication node (terminal capability)). In an example, $Z = \text{legacy } Z + w + r$, where the value of w is related to at least one of the number Kp of activated periodic/semi-persistent CSI-RS resources, the period d of a CSI-RS, and the number of symbols in one slot; $w = 14 \cdot (K_P-1) \cdot d$, where Kp is the number of activated periodic/semi-persistent CSI-RS resources, and d is the period of a CSI-RS. The value of r may be that $r = X \cdot (\mu+1) \cdot N4$, where X is a fixed value (X may be equal to 1 or not equal to 1) or the value of X depends on terminal capability, $\mu$ is an index of subcarrier spacing, and N4 is the length of a DFT vector. The value of r is independently provided for each value of P.

The value of r may be that $r = X \cdot (\mu+1) \cdot W$, where X is a fixed value (X may be equal to 1 or not equal to 1) or the value of X depends on terminal capability, $\mu$ is an index of subcarrier spacing, and W is the length of an observation window. The value of r is independently provided for each value of W.

FIG. 6 is a flowchart of another transmission method for a channel state information report according to an embodiment. As shown in FIG. 6, the method provided by this embodiment includes 210, 220, and 230.

In 210, capability information for processing a CSI report indicated by a first communication node is received.

In 220, configuration information is sent to the first communication node, where the configuration information is used to instruct the first communication node to process a CSI report.

In 230, the CSI report transmitted by the first communication node is received.

In this embodiment, the first communication node indicates information of supported capabilities to the second communication node, the second communication node sends configuration information to the first communication node, and the first communication node processes a CSI report according to the configuration information and transmits the CSI report to the second communication node according to the priority of the CSI report. On this basis, CSI reports have different priorities. In a process of transmitting CSI reports, transmission resources may be preferentially allocated to a CSI report with a high priority. If a CSI report conflict occurs and transmission resources are insufficient, a report with a lower priority may be preferentially discarded. Moreover, for occupancy of resources of the CSI report processing unit, related CSI reports may also be preferentially calculated and processed according to priorities of the CSI reports. By the effective determination of priorities of CSI reports, transmission efficiency and communication quality are improved.

In an embodiment, determining the priority of the CSI report according to the manner of acquiring the CSI in the CSI report includes calculating a third CSI according to the first CSI; calculating a fourth CSI according to the second CSI; determining a first evaluation metric performance according to the third CSI and CSI acquired through a specified manner; determining a second evaluation metric performance according to the fourth CSI and the CSI acquired through the specified manner; and in a case where the first evaluation metric performance is superior to the second evaluation metric performance, the priority of the first CSI report being higher than the priority of the second CSI report.

In an embodiment, determining the priority of the CSI report according to the manner of acquiring the CSI in the CSI report includes calculating a third precoding according to the first precoding; calculating a fourth precoding according to the second precoding; determining a first evaluation metric performance according to the third precoding and the precoding in the CSI report corresponding to the specified manner; determining a second evaluation metric performance according to the fourth precoding and the precoding in the CSI report corresponding to the specified manner; in a case where the first evaluation metric performance is superior to the second evaluation metric performance, the priority of the first CSI report being higher than the priority of the second CSI report.

In an embodiment, determining the priority of the CSI report according to the manner of acquiring the CSI in the CSI report includes calculating a third precoding matrix according to the first precoding matrix; calculating a fourth precoding matrix according to the second precoding matrix; determining a first evaluation metric performance according to the third precoding matrix and the precoding matrix in the CSI report corresponding to the specified manner; determining a second evaluation metric performance according to the fourth precoding matrix and the precoding matrix in the CSI report corresponding to the specified manner; in a case where the first evaluation metric performance is superior to the second evaluation metric performance, the priority of the first CSI report being higher than the priority of the second CSI report.

In the embodiments of the present application, the priority of a CSI report corresponding to different manners may be determined by the first communication node, or the priority of a CSI report corresponding to different manners may be determined by the second communication node. The method for determining the priority of a CSI report in any of the preceding embodiments may be performed by the first communication node or by the second communication node. For technical details not described in detail in this embodiment, reference may be made to any one of the preceding embodiments.

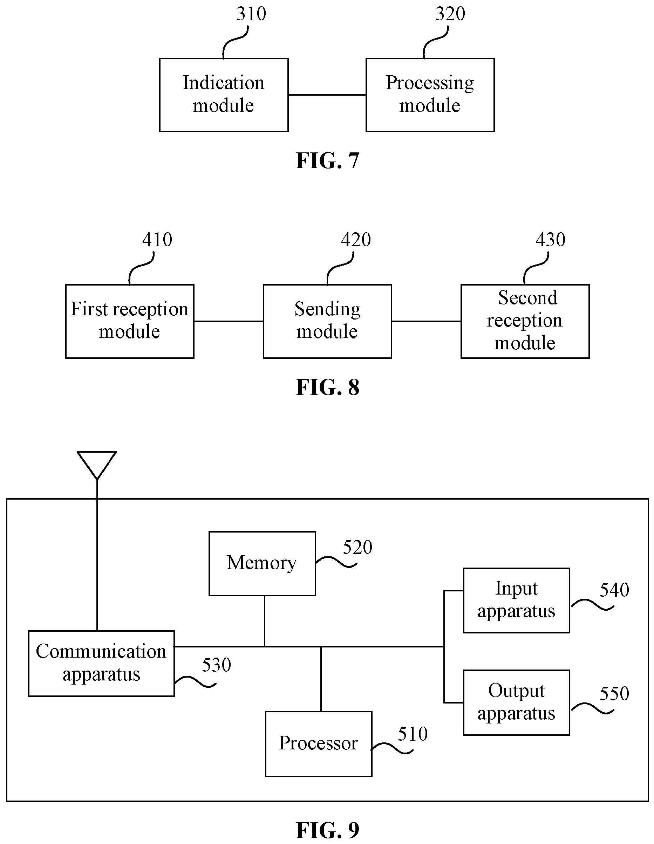

An embodiment of the present application also provides a transmission apparatus for a channel state information report. FIG. 7 is a diagram illustrating the structure of a transmission apparatus for a channel state information report according to an embodiment. As shown in FIG. 7, the transmission apparatus for a channel state information report includes an indication module 310 and a processing module 320.

The indication module 310 is configured to indicate, to a second communication node, capability information for processing a CSI report.

The processing module 320 is configured to process a CSI report according to configuration information from the second communication node.

In the transmission apparatus for a channel state information report, CSI reports have different priorities. In a process of transmitting CSI reports, transmission resources may be preferentially allocated to a CSI report with a high priority. If a CSI report conflict occurs and transmission resources are insufficient, a report with a lower priority may be preferentially discarded. Moreover, for occupancy of resources of the CSI report processing unit, related CSI reports may also be preferentially calculated and processed according to priorities of the CSI reports. By the effective determination of priorities of CSI reports, transmission efficiency and communication quality are improved.

In an embodiment, the apparatus also includes a transmission module.

The transmission module is configured to transmit the CSI report to the second communication node according to the priority of the CSI report.

In an embodiment, the apparatus also includes a determination module.

The determination module is configured to determine the priority of the CSI report according to a manner of acquiring CSI in the CSI report.

In an embodiment, a first CSI acquired through a first manner is associated with a second CSI acquired through a second manner, a first precoding in a first CSI report corresponding to the first manner is associated with a second precoding in a second CSI report corresponding to the second manner, and a first precoding matrix in the first CSI report corresponding to the first manner is associated with a second precoding matrix in the second CSI report corresponding to the second manner.

In an embodiment, the determination module is configured to perform at least one of the following:

In a case where the performance of the first CSI is inferior to the performance of the second CSI, the priority of the first CSI report is lower than the priority of the second CSI report. In a case where the performance of the first precoding is inferior to the performance of the second precoding, the priority of the first CSI report is lower than the priority of the second CSI report. In a case where the performance of the first precoding matrix is inferior to the performance of the second precoding matrix, the priority of the first CSI report is lower than the priority of the second CSI report.

In an embodiment, the determination module is configured to calculate the evaluation metric performance according to at least one of the following: the first CSI and the second CSI, the first precoding and the second precoding, or the first precoding matrix and the second precoding matrix; and in a case where the evaluation metric performance satisfies a preset threshold, the priority of the first CSI report is higher than the priority of the second CSI report.

In an embodiment, CSI acquired through a specified manner includes initial channel information, a precoding in a CSI report corresponding to the specified manner includes an initial precoding, and a precoding matrix in the CSI report corresponding to the specified manner includes an initial precoding matrix.

In an embodiment, CSI acquired through a specified manner includes CSI obtained based on a codebook manner, a precoding in a CSI report corresponding to the specified manner includes a precoding obtained based on the codebook manner, and a precoding matrix in the CSI report corresponding to the specified manner includes a precoding matrix obtained based on the codebook manner.

In an embodiment, at least one of the following parameters in a CSI report corresponding to a specified manner is higher than a set value: accuracy, parameter combination index, feedback overhead, or received signal power.

In an embodiment, the determination module is configured to calculate a third CSI according to the first CSI; calculate a fourth CSI according to the second CSI; determine a first evaluation metric performance according to the third CSI and CSI acquired through a specified manner; determine a second evaluation metric performance according to the fourth CSI and the CSI acquired through the specified manner; and in a case where the first evaluation metric performance is superior to the second evaluation metric performance, the priority of the first CSI report is higher than the priority of the second CSI report.

In an embodiment, the determination module is configured to calculate a third precoding according to the first precoding; calculate a fourth precoding according to the second precoding; determine a first evaluation metric performance according to the third precoding and the precoding in the CSI report corresponding to the specified manner; determine a second evaluation metric performance according to the fourth precoding and the precoding in the CSI report corresponding to the specified manner; in a case where the first evaluation metric performance is superior to the second evaluation metric performance, the priority of the first CSI report is higher than the priority of the second CSI report.

In an embodiment, the determination module is configured to calculate a third precoding matrix according to the first precoding matrix; calculate a fourth precoding matrix according to the second precoding matrix; determine a first evaluation metric performance according to the third precoding matrix and the precoding matrix in the CSI report corresponding to the specified manner; determine a second evaluation metric performance according to the fourth precoding matrix and the precoding matrix in the CSI report corresponding to the specified manner; in a case where the first evaluation metric performance is superior to the second evaluation metric performance, the priority of the first CSI report is higher than the priority of the second CSI report.

In an embodiment, the apparatus also includes a grouping module and a determination module.

The grouping module is configured to group CSI reports according to a manner of acquiring CSI. The determination module is configured to determine the priority of a CSI report group according to identification information.

In an embodiment, the grouping module is configured to group CSI reports calculated based on measurements of the same reference signal resource into a group, where CSI reports in a group have the same priority, and the determination module is configured to sort priorities of CSI report groups according to identification information of the reference signal resource.

In an embodiment, the grouping module is configured to group CSI reports calculated based on measurements of the same reference signal resource into a group, where CSI reports in a group have the same priority, and the determination module is configured to sort priorities of CSI report groups according to identification information of the CSI report.

In an embodiment, the grouping module is configured to group CSI reports calculated based on measurements of the same reference signal resource into a group, where CSI reports in a group have different priorities, and the determination module is configured to sort priorities of CSI report groups and sort priorities of CSI reports within a group according to identification information of the CSI report.

In an embodiment, the apparatus also includes a determination module.

The determination module is configured to determine the priority of the CSI report according to at least one of the following: an entity of the CSI report, content of the CSI report, the number of manners of acquiring CSI contained in the CSI report, a use or a function of the CSI, a manner of configuring the CSI report, a type of the CSI report, a period of the CSI report, a channel quality indicator, a signal to interference and noise ratio, an MCS level, the number of parameter combinations, a parameter combination index, or feedback overhead.

In an embodiment, the apparatus also includes a determination module.

The determination module is configured to determine the priority of the CSI report according to an entity of the CSI report or report content.

In an embodiment, the apparatus also includes a determination module.

The determination module is configured to determine the priority of the CSI report according to the number of manners of acquiring CSI included in the CSI report.

In an embodiment, the apparatus also includes a determination module.

The determination module is configured to determine the priority of the CSI report according to a use or a function of the CSI.

In an embodiment, the apparatus also includes a determination module.

The determination module is configured to determine the priority of the CSI report according to at least one of the following: a manner of configuring the CSI report, a type of the CSI report, or a period of the CSI report.

In an embodiment, the apparatus also includes a determination module.

The determination module is configured to determine the priority of the CSI report according to at least one of the following of a precoding or a precoding matrix in the CSI report: a rank, a rank indicator, or a number of layers.

In an embodiment, the apparatus also includes a determination module.

The determination module is configured to determine the priority of the CSI report according to at least one of the following in the CSI report: a channel quality indicator, a signal to interference and noise ratio, or an MCS level.

In an embodiment, the apparatus also includes a determination module.

The determination module is configured to determine the priority of the CSI report according to at least one of the following in the CSI report: the number of parameter combinations, a parameter combination index, or feedback overhead.

In an embodiment, the apparatus also includes a determination module.

The determination module is configured to determine the priority of the CSI report according to at least one of the following of an artificial intelligence or machine learning model in the CSI report: an identifier, a function, an applicable scenario, a feature, or a feature group.

In an embodiment, the apparatus also includes a determination module.

The determination module is configured to determine the priority of the CSI report according to a manner of acquiring CSI in the CSI report and entity content of the CSI report.

In an embodiment, the apparatus also includes a transmission module and a discard module.

The transmission module is configured to, for at least one CSI-RS resource or each CSI-RS resource in one or multiple CSI-RS resource sets, transmit the CSI report to the second communication node in a case where at least X CSI-RS transmission occasions are received. The discard module is configured to discard the CSI report in a case where X CSI-RS transmission occasions are not received.

In an embodiment, X satisfies at least one of the following:

For a CSI report based on CJT or a CSI report configured in a CJT mode, X is 1. In a case where discontinuous reception is configured and a CJT mode is configured, X is 1. In a case where discontinuous reception is configured and the CSI report is configured with NTRP CSI-RS resources, X is 1. In a case where discontinuous reception is configured, the CSI report is configured with X CSI-RS resources, and X is greater than or equal to NT, X is 1. For a CSI report based on an enhanced manner of a predicted precoding matrix indicator or a CSI report configured in a Doppler codebook mode, the X CSI-RS transmission occasions are continuous or discontinuous. For a periodic or semi-persistent CSI-RS, X is determined according to the capability of the first communication node, or is a fixed value, or is determined according to the number of activated periodic or semi-persistent CSI-RS resources. For an aperiodic CSI-RS, X is 1, or is determined according to the capability of the first communication node, or is a fixed value. For CSI calculation based on an artificial intelligence or machine learning model manner, or in a case configured in an artificial intelligence or machine learning mode, for a periodic or semi-persistent CSI-RS, X is determined according to the capability of the first communication node, or is determined according to the number of activated periodic or semi-persistent CSI-RS resources, or is a fixed value. For CSI calculation based on an artificial intelligence or machine learning model manner, or in a case configured in an artificial intelligence or machine learning mode, for an aperiodic CSI-RS, X is 1, or is determined according to the capability of the first communication node, or is a fixed value. For a TDCP mode being configured or a reporting entity being configured in a TDCP mode, X is 1.

In an embodiment, the CSI calculation time or a feedback delay is determined according to at least one of the following: the capability of the first communication node, the number of second communication nodes, a type of a reference signal, the number of aperiodic CSI-RS resources, an offset between two CSI-RS resources, the number of symbols in one slot, the number of precodings or precoding matrices, the length of an observation window, a legacy value, a first parameter, or a second parameter.

In an embodiment, the first parameter is determined according to at least one of the following: the number of configured second communication nodes, a subcarrier spacing index, the capability of the first communication node, or the length of a discrete Fourier transform (DFT) vector.

In an embodiment, the second parameter is determined according to at least one of the following: the number of activated periodic or semi-persistent CSI-RS resources, a period of a CSI-RS, or the number of symbols in one slot.

The transmission apparatus for a channel state information report provided in this embodiment and the transmission method for a channel state information report provided in the preceding embodiments belong to the same inventive concept. For technical details not described in detail in this embodiment, reference may be made to any one of the preceding embodiments, and this embodiment has the same beneficial effects as the applied transmission method for a channel state information report.

An embodiment of the present application also provides a transmission apparatus for a channel state information report. FIG. 8 is a diagram illustrating the structure of another transmission apparatus for a channel state information report according to an embodiment. As shown in FIG. 8, the transmission apparatus for a channel state information report includes a first reception module 410, a sending module 420, and a second reception module 430.

The first reception module 410 is configured to receive capability information for processing a CSI report indicated by a first communication node. The sending module 420 is configured to send configuration information to the first communication node, where the configuration information is used to instruct the first communication node to process a CSI report. The second reception module 430 is configured to receive the CSI report transmitted by the first communication node.

In the transmission apparatus for a channel state information report, CSI reports have different priorities. In a process of transmitting CSI reports, transmission resources may be preferentially allocated to a CSI report with a high priority. If a CSI report conflict occurs and transmission resources are insufficient, a report with a lower priority may be preferentially discarded. Moreover, for occupancy of resources of the CSI report processing unit, related CSI reports may also be preferentially calculated and processed according to priorities of the CSI reports. By the effective determination of priorities of CSI reports, transmission efficiency and communication quality are improved.

In an embodiment, the apparatus also includes a determination module configured to determine the priority of the CSI report according to a manner of acquiring CSI in the CSI report.

In an embodiment, the determination module is configured to calculate a third CSI according to the first CSI; calculate a fourth CSI according to the second CSI; determine a first evaluation metric performance according to the third CSI and CSI acquired through a specified manner; determine a second evaluation metric performance according to the fourth CSI and the CSI acquired through the specified manner; and in a case where the first evaluation metric performance is superior to the second evaluation metric performance, the priority of the first CSI report is higher than the priority of the second CSI report.

In an embodiment, the apparatus also includes a determination module configured to determine the priority of the CSI report according to a manner of acquiring CSI in the CSI report.

In an embodiment, the determination module is configured to calculate a third precoding according to the first precoding; calculate a fourth precoding according to the second precoding; determine a first evaluation metric performance according to the third precoding and the precoding in the CSI report corresponding to the specified manner; determine a second evaluation metric performance according to the fourth precoding and the precoding in the CSI report corresponding to the specified manner; in a case where the first evaluation metric performance is superior to the second evaluation metric performance, the priority of the first CSI report is higher than the priority of the second CSI report.

In an embodiment, the apparatus also includes a determination module configured to determine the priority of the CSI report according to a manner of acquiring CSI in the CSI report.

In an embodiment, the determination module is configured to calculate a third precoding matrix according to the first precoding matrix; calculate a fourth precoding matrix according to the second precoding matrix; determine a first evaluation metric performance according to the third precoding matrix and the precoding matrix in the CSI report corresponding to the specified manner; determine a second evaluation metric performance according to the fourth precoding matrix and the precoding matrix in the CSI report corresponding to the specified manner; in a case where the first evaluation metric performance is superior to the second evaluation metric performance, the priority of the first CSI report is higher than the priority of the second CSI report.

The transmission apparatus for a channel state information report provided in this embodiment and the transmission method for a channel state information report provided in the preceding embodiments belong to the same inventive concept. For technical details not described in detail in this embodiment, reference may be made to any one of the preceding embodiments, and this embodiment has the same beneficial effects as the applied transmission method for a channel state information report.

An embodiment of the present application also provides a communication node. FIG. 9 is a diagram illustrating the hardware structure of a communication node according to an embodiment. As shown in FIG. 9, the communication node provided by the present application includes a processor 510 and a memory 520. The communication node may include one or more processors 510, with one processor 510 shown in FIG. 9 as an example. The memory 520 is configured to store one or more programs that, when executed by the one or more processors 510, cause the one or more processors 510 to implement the transmission method for a channel state information report as described in the embodiments of the present application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners. Connection via the bus is used as an example in FIG. 9.

The input apparatus 540 may be configured to receive input digital or character information and generate key signal input related to user settings and function control of the communication node. The output apparatus 550 may include a display device, for example, a display screen.

The communication apparatus 530 may include a receiver and a transmitter. The communication apparatus 530 is configured to perform information transmission and reception communication under the control of the processor 510,

As a computer-readable storage medium, the memory 520 may be configured to store software programs, computer-executable programs, and modules, such as program instructions/modules (for example, the indication module 310, the processing module 320, and the transmission module 330 in the transmission apparatus for a channel state information report) corresponding to the transmission method for a channel state information report described in the embodiments of the present application. The memory 520 may include a program storage region and a data storage region. The program storage region may store an operating system and an application program required by at least one function. The data storage region may store data or the like created according to the use of the communication node. Additionally, the memory 520 may include a high-speed random-access memory and may also include a nonvolatile memory such as at least one disk memory, flash memory, or another nonvolatile solid-state memory. In some examples, the memory 520 may include memories that are remotely disposed with respect to the processor 510, and these remote memories may be connected to the communication node via a network. Examples of the preceding network include but are not limited to, the Internet, an intranet, a local area network, a mobile communication network, and a combination thereof.

An embodiment of the present application also provides a storage medium. The storage medium stores a computer program that, when executed by a processor, causes the processor to perform the transmission method for a channel state information report according to any embodiment of the present application. The method includes the following: Capability information for processing a CSI report is indicated to a second communication node. A CSI report is processed according to configuration information from the second communication node. Alternatively, the method includes the following: Capability information for processing a CSI report indicated by a first communication node is received. Configuration information is sent to the first communication node, where the configuration information is used to instruct the first communication node to process a CSI report. The CSI report transmitted by the first communication node is received.

The computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The preceding descriptions are only example embodiments of the present application and are not intended to limit the scope of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), and an optical memory apparatus and system (a digital video disc (DVD) or a compact disk (CD)). Computer-readable media may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1.  A transmission method for a channel state information report, applied to a first communication node and comprising:

    indicating, to a second communication node, capability information for processing a channel state information, CSI, report; and
    processing a CSI report according to configuration information from the second communication node.

2.  The transmission method according to claim 1, further comprising:
    transmitting the CSI report to the second communication node according to a priority of the CSI report.

3.  The transmission method according to claim 2, further comprising:
    determining the priority of the CSI report according to a manner of acquiring CSI in the CSI report.

4.  The transmission method according to claim 3, wherein a first CSI acquired through a first manner is associated with a second CSI acquired through a second manner;

    a first precoding in a first CSI report corresponding to the first manner is associated with a second precoding in a second CSI report corresponding to the second manner; and
    a first precoding matrix in the first CSI report corresponding to the first manner is associated with a second precoding matrix in the second CSI report corresponding to the second manner.

5.  The transmission method according to claim 4, wherein determining the priority of the CSI report according to the manner of acquiring the CSI in the CSI report comprises at least one of the following:

in a case where a performance of the first CSI is inferior to a performance of the second CSI, a priority of the first CSI report is lower than a priority of the second CSI report;

in a case where a performance of the first precoding is inferior to a performance of the second precoding, a priority of the first CSI report is lower than a priority of the second CSI report; or

in a case where a performance of the first precoding matrix is inferior to a performance of the second precoding matrix, a priority of the first CSI report is lower than a priority of the second CSI report.

6. The transmission method according to claim 4, wherein determining the priority of the CSI report according to the manner of acquiring the CSI in the CSI report comprises:

calculating an evaluation metric performance according to at least one of the following: the first CSI and the second CSI, the first precoding and the second precoding, or the first precoding matrix and the second precoding matrix; and

in a case where the evaluation metric performance satisfies a preset threshold, a priority of the first CSI report being higher than a priority of the second CSI report.

7. The transmission method according to claim 4, wherein CSI acquired through a specified manner comprises initial channel information, a precoding in a CSI report corresponding to the specified manner comprises an initial precoding, and a precoding matrix in the CSI report corresponding to the specified manner comprises an initial precoding matrix.

8. The transmission method according to claim 4, wherein CSI acquired through a specified manner comprises CSI obtained based on a codebook manner, a precoding in a CSI report corresponding to the specified manner comprises a precoding obtained based on the codebook manner, and a precoding matrix in the CSI report corresponding to the specified manner comprises a precoding matrix obtained based on the codebook manner.

9. The transmission method according to claim 4, wherein at least one of the following parameters in a CSI report corresponding to a specified manner is higher than a set value: accuracy, parameter combination index, feedback overhead, or received signal power.

10. The transmission method according to claim 4, wherein determining the priority of the CSI report according to the manner of acquiring the CSI in the CSI report comprises:

calculating a third CSI according to the first CSI;

calculating a fourth CSI according to the second CSI;

determining a first evaluation metric performance according to the third CSI and CSI acquired through a specified manner;

determining a second evaluation metric performance according to the fourth CSI and the CSI acquired through the specified manner; and

in a case where the first evaluation metric performance is superior to the second evaluation metric performance, a priority of the first CSI report being higher than a priority of the second CSI report.

11. The transmission method according to claim 8, wherein determining the priority of the CSI report according to the manner of acquiring the CSI in the CSI report comprises:

calculating a third precoding according to the first precoding;

calculating a fourth precoding according to the second precoding;

determining a first evaluation metric performance according to the third precoding and the precoding in the CSI report corresponding to the specified manner;

determining a second evaluation metric performance according to the fourth precoding and the precoding in the CSI report corresponding to the specified manner; and

in a case where the first evaluation metric performance is superior to the second evaluation metric performance, a priority of the first CSI report being higher than a priority of the second CSI report.

12. The transmission method according to claim 8, wherein determining the priority of the CSI report according to the manner of acquiring the CSI in the CSI report comprises:

calculating a third precoding matrix according to the first precoding matrix;

calculating a fourth precoding matrix according to the second precoding matrix;

determining a first evaluation metric performance according to the third precoding matrix and the precoding matrix in the CSI report corresponding to the specified manner;

determining a second evaluation metric performance according to the fourth precoding matrix and the precoding matrix in the CSI report corresponding to the specified manner; and

in a case where the first evaluation metric performance is superior to the second evaluation metric performance, a priority of the first CSI report being higher than a priority of the second CSI report.

13. The transmission method according to claim 1, further comprising:
grouping CSI reports according to a manner of acquiring CSI, and determining a priority of a CSI report group according to identification information.

14. The transmission method according to claim 13, wherein grouping the CSI reports according to the manner of acquiring the CSI and determining the priority of the CSI report group according to the identification information comprises:
grouping CSI reports calculated based on measurements of a same reference signal resource into a group, wherein CSI reports in a group have a same priority, and sorting priorities of CSI report groups according to identification information of the reference signal resource.

15. The transmission method according to claim 13, wherein grouping the CSI reports according to the manner of acquiring the CSI and determining the priority of the CSI report group according to the identification information comprises:
grouping CSI reports calculated based on measurements of a same reference signal resource into a group, wherein CSI reports in a group have a same priority, and sorting priorities of CSI report groups according to identification information of the CSI report.

16. The transmission method according to claim 13, wherein grouping the CSI reports according to the manner of acquiring the CSI and determining the priority of the CSI report group according to the identification information comprises:
grouping CSI reports calculated based on measurements of a same reference signal resource into a group, wherein CSI reports in a group have different priorities, and according to identification information of the CSI report, sorting priorities of CSI report groups and sorting priorities of CSI reports within a group.

17. The transmission method according to claim 1, further comprising:
determining a priority of the CSI report according to at least one of the following:
an entity of the CSI report, content of the CSI report, a number of manners of acquiring CSI contained in the CSI report, a use or a function of the CSI, a manner of configuring the CSI report, a type of the CSI report, a period of the CSI report, a channel quality indicator, a signal to interference and noise ratio, a modulation and coding scheme, MCS, level, a number of parameter combinations, a parameter combination index, or feedback overhead.

18. The transmission method according to claim 1, further comprising:
determining a priority of the CSI report according to at least one of the following of a precoding or a precoding matrix in the CSI report: a rank, a rank indicator, or a number of layers.

19. The transmission method according to claim 1, further comprising:
determining a priority of the CSI report according to at least one of the following of an artificial intelligence or machine learning model in the CSI report: an identifier, a function, an applicable scenario, a feature, or a feature group.

20. The transmission method according to claim 1, further comprising:

for at least one channel state information reference signal, CSI-RS, resource or each CSI-RS resource in at least one CSI-RS resource set, in a case where at least X CSI-RS transmission occasions are received, transmitting the CSI report to the second communication node, wherein X is a positive integer; and
in a case where X CSI-RS transmission occasions are not received, discarding the CSI report.

21. The transmission method according to claim 20, wherein X satisfies at least one of the following:

for a CSI report based on coherent joint transmission, CJT, or a CSI report configured in a CJT mode, X is 1;
in a case where discontinuous reception is configured and a CJT mode is configured, X is 1;

in a case where discontinuous reception is configured and the CSI report is configured with NTRP CSI-RS resources, X is 1;

in a case where discontinuous reception is configured, the CSI report is configured with X CSI-RS resources, and X is greater than or equal to NT, X is 1;

for a CSI report based on an enhanced manner of a predicted precoding matrix indicator or a CSI report configured in a Doppler codebook mode, the X CSI-RS transmission occasions are continuous or discontinuous;

for a periodic or semi-persistent CSI-RS, X is determined according to a capability of the first communication node, or is a fixed value, or is determined according to a number of activated periodic or semi-persistent CSI-RS resources;

for an aperiodic CSI-RS, X is 1, or is determined according to a capability of the first communication node, or is a fixed value;

for CSI calculation based on an artificial intelligence or machine learning model manner, or in a case configured in an artificial intelligence or machine learning mode, for a periodic or semi-persistent CSI-RS, X is determined according to a capability of the first communication node, or is determined according to a number of activated periodic or semi-persistent CSI-RS resources, or is a fixed value;

for CSI calculation based on an artificial intelligence or machine learning model manner, or in a case configured in an artificial intelligence or machine learning mode, for an aperiodic CSI-RS, X is 1, or is determined according to a capability of the first communication node, or is a fixed value; or

for a time domain channel property, TDCP, mode being configured or a reporting entity being configured in a TDCP mode, X is 1.

22. The transmission method according to claim 1, wherein
a CSI calculation time or a feedback delay is determined according to at least one of the following:
a capability of the first communication node, a number of second communication nodes, a type of a reference signal, a number of aperiodic CSI-RS resources, an offset between two CSI-RS resources, a number of symbols in one slot, a number of precodings or precoding matrices, a length of an observation window, a first parameter, or a second parameter.

23. The transmission method according to claim 22, wherein the first parameter is determined according to at least one of the following:
a number of configured second communication nodes, a subcarrier spacing index, the capability of the first communication node, or a length of a discrete Fourier transform, DFT, vector.

24. The transmission method according to claim 22, wherein the second parameter is determined according to at least one of the following:
a number of activated periodic or semi-persistent CSI-RS resources, a period of a CSI-RS, or the number of symbols in one slot.

25. A transmission method for a channel state information report, applied to a second communication node and comprising:

receiving capability information for processing a channel state information, CSI, report indicated by a first communication node;

sending configuration information to the first communication node, wherein the configuration information is used to instruct the first communication node to process a channel state information report; and

receiving the CSI report transmitted by the first communication node.

26. A communication node, comprising: a memory and at least one processor; wherein

the memory is configured to store at least one program; and

when executed by the at least one processor, the at least one program causes the at least one processor to perform the transmission method for a channel state information report according to any one of claims 1 to 25.

27. A computer-readable storage medium storing a computer program that, when executed by a processor, performs the transmission method for a channel state information report according to any one of claims 1 to 25.

| Indicate capability information for processing a CSI report to a second communication node | ~110 |

| Process a CSI report according to configuration information from the second communication node | ~120 |

**FIG. 1**

| Initial channel information | ⇒ | Artificial intelligence /machine learning model | ⇒ | First channel state information | ⇒ | Artificial intelligence /machine learning model | ⇒ | Third channel state information |

First communication node                     Second communication node

**FIG. 2**

| Initial channel information | ⇒ | Codebook processing module | ⇒ | Second channel state information | ⇒ | Codebook processing module | ⇒ | Fourth channel state information |

First communication node                     Second communication node

**FIG. 3**

| Initial channel information | ⇒ | High-precision processing module | ⇒ | Channel state information | ⇒ | High-precision processing module | ⇒ | Channel state information |

First communication node                     Second communication node

**FIG. 4**

First communication node

**FIG. 5**

| | |
|---|---|
| Receive capability information for processing a CSI report indicated by a first communication node | 210 |
| Send configuration information to the first communication node, where the configuration information is used to instruct the first communication node to process a CSI report | 220 |
| Receive the CSI report transmitted by the first communication node according to the priority of the CSI report | 230 |

**FIG. 6**

310

320

Indication module —— Processing module

**FIG. 7**

410

420

430

First reception module —— Sending module —— Second reception module

**FIG. 8**

Memory 520

Input apparatus 540

Communication apparatus 530

Output apparatus 550

Processor 510

**FIG. 9**

## INTERNATIONAL SEARCH REPORT

| International application No. |
|---|
| **PCT/CN2024/088510** |

| A. | CLASSIFICATION OF SUBJECT MATTER |
|---|---|

H04B7/06(2006.01)i; H04W24/10(2009.01)i

According to International Patent Classification (IPC) or to both national classification and IPC

| B. | FIELDS SEARCHED |
|---|---|

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT, ENTXT, WPABS, DWPI, CNKI, 3GPP, CJFD: 信道状态信息, 报告, 并发, 并行, 能力, 配置, 优先, 预编码, 码本, channel state information, report+, concurrent, capability, configurat+, priority, precode, codebook, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115152294 A (QUALCOMM INC.) 04 October 2022 (2022-10-04) description, paragraphs 107-253 | 1-3, 17, 18, 22-27 |
| X | CN 113519179 A (APPLE INC.) 19 October 2021 (2021-10-19) description, paragraphs 105-229 | 1-3, 17, 18, 22-27 |
| X | US 2018115357 A1 (LG ELECTRONICS, INC.) 26 April 2018 (2018-04-26) description, paragraphs 668-1184 | 1, 22-27 |
| X | WO 2021027920 A1 (QUALCOMM INC.) 18 February 2021 (2021-02-18) description, paragraphs 108-261 | 1, 22-27 |
| A | US 2022046443 A1 (APPLE INC.) 10 February 2022 (2022-02-10) entire document | 1-27 |
| A | WO 2023022144 A1 (NTT DOCOMO, INC.) 23 February 2023 (2023-02-23) entire document | 1-27 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 June 2024** | **24 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 761 131 A1

International application No.

**PCT/CN2024/088510**

| Patent document cited in search report | | | Publication date (day/month/year) | Patent family member(s) | | | Publication date (day/month/year) |
|---|---|---|---|---|---|---|---|
| CN | 115152294 | A | 04 October 2022 | US | 2023057169 | A1 | 23 February 2023 |
| | | | | WO | 2021159445 | A1 | 19 August 2021 |
| | | | | EP | 4104584 | A1 | 21 December 2022 |
| | | | | EP | 4104584 | A4 | 21 February 2024 |
| CN | 113519179 | A | 19 October 2021 | US | 2022053477 | A1 | 17 February 2022 |
| | | | | US | 11570782 | B2 | 31 January 2023 |
| | | | | US | 2023156753 | A1 | 18 May 2023 |
| | | | | US | 11950263 | B2 | 02 April 2024 |
| | | | | WO | 2021159330 | A1 | 19 August 2021 |
| | | | | EP | 3884699 | A1 | 29 September 2021 |
| | | | | EP | 3884699 | A4 | 03 November 2021 |
| | | | | EP | 3884699 | B1 | 01 May 2024 |
| | | | | JP | 2023513528 | A | 31 March 2023 |
| | | | | JP | 2023169305 | A | 29 November 2023 |
| | | | | KR | 20210104640 | A | 25 August 2021 |
| | | | | KR | 102507246 | B1 | 06 March 2023 |
| | | | | KR | 20220132670 | A | 30 September 2022 |
| | | | | KR | 102618957 | B1 | 27 December 2023 |
| US | 2018115357 | A1 | 26 April 2018 | US | 10361757 | B2 | 23 July 2019 |
| | | | | US | 2020169303 | A1 | 28 May 2020 |
| | | | | US | 10938455 | B2 | 02 March 2021 |
| | | | | WO | 2016163842 | A1 | 13 October 2016 |
| | | | | WO | 2016163841 | A1 | 13 October 2016 |
| | | | | US | 2018123654 | A1 | 03 May 2018 |
| | | | | US | 10536199 | B2 | 14 January 2020 |
| WO | 2021027920 | A1 | 18 February 2021 | CN | 114556802 | A | 27 May 2022 |
| US | 2022046443 | A1 | 10 February 2022 | | None | | |
| WO | 2023022144 | A1 | 23 February 2023 | CN | 117813858 | A | 02 April 2024 |

Form PCT/ISA/210 (patent family annex) (July 2022)